# EUROPEAN PATENT SPECIFICATION

(11) **EP 4 224 654 B1**
(45) Date of publication and mention of the grant of the patent: **19.11.2025**
(21) Application number: 21875768.0
(22) Date of filing: 30.09.2021
(51) Int. Cl.: H02J 3/01, H02M 1/12, H02M 7/12, H02M 7/48, H02M 5/458, H02M 7/00, H02M 7/06, H02M 7/5387

(54) **POWER CONVERSION DEVICE**
LEISTUNGSWANDLER
DISPOSITIF DE CONVERSION DE PUISSANCE

(30) Priority: 30.09.2020 JP 2020165291; 30.09.2020 JP 2020165290; 30.09.2020 JP 2020165289; 30.09.2020 JP 2020165288
(43) Date of publication of application: 09.08.2023
(73) Proprietor: Daikin Industries, Ltd., Osaka-shi, Osaka 530-0001 (JP)
(72) Inventor: FUJIWARA, Masahide, Osaka-shi, Osaka 530-0001 (JP); ITOU, Taku, Osaka-shi, Osaka 530-0001 (JP); KOTERA, Keito, Osaka-shi, Osaka 530-0001 (JP); OGURI, Akihiko, Osaka-shi, Osaka 530-0001 (JP); KOUNO, Masaki, Osaka-shi, Osaka 530-0001 (JP); KAWASHIMA, Reiji, Osaka-shi, Osaka 530-0001 (JP); HIRAOKA, Nobuyasu, Osaka-shi, Osaka 530-0001 (JP); KOYAMA, Yoshitsugu, Osaka-shi, Osaka 530-0001 (JP); KOYAMA, Kenji, Osaka-shi, Osaka 530-0001 (JP); YAMAMOTO, Masahiro, Osaka-shi, Osaka 530-0001 (JP)
(74) Representative: Global IP Europe Patentanwaltskanzlei
(86) International application number: PCT/JP2021/036059
(87) International publication number: WO 2022/071472

(56) References cited:
- WO-A1-2019/069489
- CN-A- 106 487 279
- JP-A- 2016 158 323
- JP-A- 2016 158 323
- JP-A- 2017 060 392
- JP-A- 2017 060 392
- JP-A- 2018 046 677
- US-A1- 2015 128 631

## Description

### TECHNICAL FIELD

The present invention relates to a power conversion device including an active filter circuit.

### BACKGROUND ART

As means for suppressing a harmonic current generated in a power conversion device, for example, an active filter circuit as disclosed in Patent Literature 1 (WO 2017-115431 A) is widely known.

JP 2017-060392 A and JP 2016-158323 A each disclose a power conversion device comprising:
an active filter circuit connected in parallel between an alternating-current (AC) power source and a rectifier circuit that rectifies AC power of the AC power source into direct-current (DC) power, the active filter circuit being configured to generate a compensation current for suppressing a harmonic current;
an inverter circuit configured to convert DC power outputted from the rectifier circuit into AC power having a predetermined frequency; and
one printed wiring board on which the active filter circuit and the inverter circuit are mounted.

WO 2019/069489 A1 discloses arranging control ground patterns 112a-112c on a circuit board CB such that the control ground patterns 112a-112c do not overlap in a plane view, wherein the control ground patterns 112a-112c are of different nodes to drive semiconductor swiching elements 102a-102d.

### SUMMARY OF THE INVENTION

### <Technical Problem>

Conventionally, a mounting board of an active filter circuit is a board different from a mounting board of an inverter circuit constituting a DC-AC conversion unit of a power conversion device, which causes an increase in size and an increase in cost of the power conversion device.

Therefore, there are problems of space saving, component saving, and cost reduction of the power conversion device.

### <Solution to Problem>

A power conversion device according to the invention includes an active filter circuit, an inverter circuit, and one printed wiring board. The active filter circuit is connected in parallel between an AC power source and a rectifier circuit, and generates a compensation current for suppressing a harmonic current. The rectifier circuit rectifies AC power of the AC power source into DC power. The inverter circuit converts DC power outputted from the rectifier circuit into AC power having a predetermined frequency. The active filter circuit and the inverter circuit are mounted on one printed wiring board.

In this power conversion device, the power conversion device can be reduced in size, weight, and cost, by mounting the active filter circuit and the inverter circuit on one printed wiring board.

According to the power conversion device of the present invention, the printed wiring board is a multilayer printed wiring board. The multilayer printed wiring board has a plurality of conductive pattern layers laminated with an insulator layer interposed in between. The printed wiring board includes a first layer and a second layer. The first layer forms a first low-voltage pattern for detecting a current or a voltage of the active filter circuit. The second layer forms a high-voltage pattern of the inverter circuit. The first low-voltage pattern does not overlap with the high-voltage pattern as viewed in a laminating direction.

In this power conversion device, the first low-voltage pattern of the active filter circuit does not overlap with the high-voltage pattern of the inverter circuit as viewed in the laminating direction. Therefore, even when the inverter circuit operates, noise is less likely to be superimposed on the first low-voltage pattern of the active filter circuit. Therefore, the current or the voltage of the active filter circuit is accurately detected.

A power conversion device according to a second aspect is the power conversion device in which the first layer further forms a second low-voltage pattern belonging to the active filter circuit, separately from the first low-voltage pattern. A part of the second low-voltage pattern overlaps with the high-voltage pattern as viewed in the laminating direction.

In this power conversion device, even if noise is superimposed on the second low-voltage pattern irrelevant to detection of the current or the voltage of the active filter circuit, detection accuracy of the current or the voltage is not affected. Therefore, by allowing a part of the second low-voltage pattern to overlap with the high-voltage pattern as viewed in the laminating direction, a degree of freedom in designing the printed wiring board is increased.

A power conversion device according to a third aspect is the power conversion device according to the first aspect, in which the printed wiring board is a multilayer printed wiring board. The multilayer printed wiring board has a plurality of conductive pattern layers laminated with an insulator layer interposed in between. The printed wiring board includes a first layer and a second layer. The first layer forms a first low-voltage pattern for detecting a current or a voltage of the inverter circuit. The second layer forms a high-voltage pattern of the active filter circuit. The first low-voltage pattern does not overlap with the high-voltage pattern as viewed in a laminating direction.

In this power conversion device, the first low-voltage pattern of the inverter circuit does not overlap with the high-voltage pattern of the active filter circuit as viewed in the laminating direction. Therefore, even when the active filter circuit operates, noise is not superimposed on the first low-voltage pattern of the inverter circuit. Therefore, the current or the voltage of the inverter circuit is accurately detected.

A power conversion device according to a fourth aspect is the power conversion device according to the third aspect, in which the first layer further forms a second low-voltage pattern belonging to the inverter circuit, separately from the first low-voltage pattern. A part of the second low-voltage pattern overlaps with the high-voltage pattern as viewed in the laminating direction.

In this power conversion device, even if noise is superimposed on the second low-voltage pattern irrelevant to detection of the current or the voltage of the inverter circuit, detection accuracy of the current or the voltage is not affected. Therefore, by allowing a part of the second low-voltage pattern to overlap with the high-voltage pattern as viewed in the laminating direction, a degree of freedom in designing the printed wiring board is increased.

A power conversion device according to a fifth aspect is the power conversion device according to any one of the first to fourth aspects, and further includes one switching power source circuit mounted on the printed wiring board. The active filter circuit and the inverter circuit receive power supply from the switching power source circuit.

In this power conversion device, since it is not necessary for each of the active filter circuit and the inverter circuit to individually include a switching power source circuit, the power conversion device can be reduced in size, weight, and cost.

A power conversion device according to a sixth aspect is the power conversion device according to the fifth aspect, in which mounting areas of the switching power source circuit, the active filter circuit, and the inverter circuit in the printed wiring board are separated. Circuit areas of the switching power source circuit, the active filter circuit, and the inverter circuit in the printed wiring board are also separated.

In this power conversion device, a configuration is realized in which the first low-voltage pattern for detecting a current or a voltage does not overlap with the high-voltage pattern as viewed in the laminating direction.

A power conversion device according to a seventh aspect is the power conversion device according to any one of the first to sixth aspects, and further includes a capacitor that smooths output power of the rectifier circuit, and a current-limiting circuit that limits a current flowing through the capacitor. The active filter circuit includes a first switching circuit that generates a compensation current for suppressing a harmonic current, and a first capacitor that smooths output power of the first switching circuit. The current-limiting circuit is also used as a current-limiting circuit that limits a current flowing through the first capacitor of the active filter circuit.

In this power conversion device, since it is not necessary for the active filter circuit to individually include a current-limiting circuit, the power conversion device can be reduced in size, weight, and cost.

A power conversion device according to an eighth aspect is the power conversion device according to the seventh aspect, in which the active filter circuit further includes a first power module that incorporates the first switching circuit in one package. The inverter circuit includes: a second power module that incorporates, in one package, a second switching circuit that converts DC power into AC power having a predetermined frequency; and a cooler that cools the second power module. The cooler is also used as a cooler that cools the first power module.

In this power conversion device, since the first power module and the second power module can be cooled by one cooler, the power conversion device can be reduced in size, weight, and cost.

A power conversion device according to a ninth aspect is the power conversion device according to any one of the first to seventh aspects, in which the active filter circuit includes a first heavy object that is an electric component. The inverter circuit includes a second heavy object that is an electric component. When the printed wiring board is sectioned into a first area, a second area, and a third area sequentially aligned in a predetermined first direction, the first heavy object is arranged in the first area, and the second heavy object is arranged in the third area.

The inverter circuit and the active filter circuit include relatively heavy electrical components that can be said to be heavy objects. Therefore, when the inverter circuit and the active filter circuit are mounted on one printed wiring board, distortion and deflection are likely to occur in the printed wiring board if such heavy objects are biased in one area, which causes a failure.

However, in this power conversion device, the heavy objects are mounted so as to sandwich the area where a power module is mounted. Therefore, the heavy objects are prevented from being biased to one area, and distortion and deflection are less likely to occur in the printed wiring board.

A power conversion device according to a 10th aspect is the power conversion device according to the 9^{th} aspect, in which the active filter circuit includes a first power module that generates a compensation current for suppressing a harmonic current. The inverter circuit includes a second power module that converts DC power into AC power having a predetermined frequency. At least one of the first power module or the second power module is arranged in the second area.

In this power conversion device, since the second area is reinforced by mounting at least one power module, it is not necessary to newly add a reinforcing member.

A power conversion device according to an 11th aspect is the power conversion device according to the 10^{th} aspect, in which both the first power module and the second power module are arranged in the second area.

In this power conversion device, since the second area is reinforced by mounting two power modules, it is not necessary to newly add a reinforcing member.

A power conversion device according to 12th aspect is the power conversion device according to the 10th or 11th aspect, and further includes a cooler. The cooler is attached to the first power module and the second power module, and cools the first power module and the second power module.

In this power conversion device, two power modules are mounted in the second area, and the two power modules are further reinforced by being mechanically connected by the cooler. Therefore, it is not necessary to newly add a reinforcing member.

A power conversion device according to a 13th aspect is the power conversion device according to the 12th aspect, in which the first power module and the second power module are arranged along a second direction orthogonal to the first direction. The cooler has a shape extending along the second direction.

In this power conversion device, since the cooler having the shape extending along the second direction is attached to both power modules of the first power module and the second power module arranged along the second direction, strength of the second area in the second direction is enhanced. Here, the strength in the second direction is bending strength when the printed wiring board is regarded as a beam extending in the second direction.

A power conversion device according to a 14th aspect is the power conversion device according to any one of the 9th to 13th aspects, in which at least one of the first heavy object or the second heavy object is a reactor.

The reactor is heavier and higher than the first power module and the second power module, and an operator can quickly recognize that the reactor is a heavy object. Therefore, in this power conversion device, the reactor is mounted in the first area and the third area closer to an end of the printed wiring board than the second area, so that the operator naturally holds near the heavy object where the reactor is present when carrying the printed wiring board. This results in preventing distortion and deflection of the printed wiring board.

A power conversion device according to a 15th aspect is the power conversion device according to any one of the 9th to 14th aspects, in which when at least one of the first heavy object or the second heavy object includes a plurality of components, the plurality of components are arranged in the second direction orthogonal to the first direction.

When the individual heavy objects are concentrated in one place in each area, if a held spot when the printed wiring board is held is away from the individual heavy objects, a stress acting on the held spot increases.

However, in this power conversion device, individual components of the first heavy object are arranged along the second direction of the first area of the printed wiring board, and the second heavy object is arranged along the second direction of the third area. Therefore, when the operator holds the printed wiring board, the stress acting on the held spot becomes smaller than that of the former case. This results in suppressing distortion and deflection of the printed wiring board.

A power conversion device according to a 16th aspect is the power conversion device according to any one of the 9th to 15th aspects, in which the first area is in a distance within 1/3 of a length of the printed wiring board in the first direction, from a first end that is one end of the printed wiring board in the first direction. The third area is in a distance within 1/3 of the length of the printed wiring board in the first direction from a second end that is another end of the printed wiring board in the first direction.

In this power conversion device, since the operator holds an end side when carrying the printed wiring board, the operator inevitably holds the first area or the third area where heavy objects are present. This results in preventing distortion and deflection of the printed wiring board.

A power conversion device according to an 17th aspect is the power conversion device according to any one of the 9th to 16th aspects, in which mounting of the first heavy object and the second heavy object on the printed wiring board is realized when the printed wiring board on which the first heavy object and the second heavy object are placed passes through a solder flow tank along the second direction orthogonal to the first direction.

In this power conversion device, the heavy objects pass through the solder flow tank along the second direction while being placed in the first area and the third area closer to an end of the printed wiring board than the second area. Therefore, the heavy objects are to be located on a holding portion side where an end of the printed wiring board is held, and distortion and deflection of the printed wiring board are prevented. This results in preventing soldering failure.

A power conversion device according to a 18th aspect is the power conversion device according to any one of the first to seventh aspects, in which the active filter circuit includes a first power module. The first power module generates a compensation current for suppressing a harmonic current. The inverter circuit includes a second power module. The second power module converts DC power into AC power having a predetermined frequency. The power conversion device further includes a cooler and a first heat transfer member. The cooler is attached to the first power module and the second power module, and cools the first power module and the second power module. The first heat transfer member is arranged between the first power module and the cooler, and increases an impedance between the first power module and the cooler.

In this power conversion device, since the impedance between the first power module and the cooler is increased by the first heat transfer member, a parasitic capacitance between the first power module and the cooler is reduced. As a result, a ground impedance of the cooler increases, a noise component passes through an existing noise filter, the noise component is reduced, and deterioration of EMI (a noise terminal voltage) during operation of the active filter circuit is suppressed.

A power conversion device according to a 19th aspect is the power conversion device according to the 18th aspect, in which a thickness of the first heat transfer member is determined based on a potential difference between a terminal of the first power module and the cooler.

In this power conversion device, since the thickness of the first heat transfer member is determined based on a physical quantity such as a potential difference between the terminal of the first power module and the cooler, the thickness of the first heat transfer member is appropriately set without excess or deficiency.

A power conversion device according to a 20th aspect is the power conversion device according to the 18th or 19th aspect, in which a ground impedance of the first heat transfer member is adjusted by surface treatment on the first heat transfer member.

In this power conversion device, since the ground impedance can be adjusted by the surface treatment on the first heat transfer member, it is possible to adjust the ground impedance while maintaining a heat transfer property of the first heat transfer member without requiring other members.

A power conversion device according to a 21th aspect is the power conversion device according to any one of the 18th to 20th aspects, in which the cooler includes a cooling portion and a heat absorbing portion. The heat absorbing portion transfers heat from the first power module and the second power module to the cooling portion. The heat absorbing portion includes a heat absorbing surface surrounded by a long side parallel to a longitudinal direction of the cooling portion and a short side orthogonal to the longitudinal direction. The first power module and the second power module are attached to the heat absorbing surface of the heat absorbing portion. The first power module and the second power module are both rectangular parallelepipeds. A length of a short side of the first power module is equal to or more than a short side of the heat absorbing surface and equal to or less than a short side of the second power module.

Since the first power module of the active filter circuit is smaller in package than the second power module of the inverter circuit, a distance between a terminal of the first power module and the heat absorbing portion becomes short when the first power module is attached to the heat absorbing portion of the cooler, which is more disadvantageous than the second power module in terms of a creepage distance and a spatial distance. In this power conversion device, since there is the first heat transfer member that increases the impedance between the first power module and the cooler, the disadvantage can be overcome.

A power conversion device according to a 22th aspect is the power conversion device according to any one of the 18th to 21th aspects, and further includes a second heat transfer member. The second heat transfer member is arranged between the second power module and the cooler. An effect of increasing an impedance between the second power module and the cooler by the second heat transfer member is smaller than an effect of increasing the impedance between the first power module and the cooler by the first heat transfer member.

In this power conversion device, a noise component of the inverter circuit can be reduced by the existing noise filter circuit. Therefore, the effect of increasing the impedance between the second power module and the cooler by the second heat transfer member may be smaller than the effect of increasing the impedance between the first power module and the cooler by the first heat transfer member. Therefore, since the existing noise filter circuit does not need to be strong, the size does not increase.

A power conversion device according to a 23th aspect is the power conversion device according to any one of the first to seventh aspects, in which the active filter circuit includes a first power module. The first power module incorporates, in one package, a plurality of switching elements that generate a compensation current for suppressing a harmonic current and a control circuit that controls the switching elements. A control voltage of the first power module is 16.0 V or more.

The active filter circuit is connected in parallel between the AC power source and the rectifier circuit, and the first power module receives an input current at a time of recovery from voltage drop or power failure of the power source and an inrush current due to power source frequency fluctuation during operation. Therefore, the first power module is required to have durability against inrush current.

In this power conversion device, by setting the control voltage of the first power module to 16.0 V or more, which is higher than general 15 V, inrush current durability of the switching element is enhanced, which can increase breakdown durability of the switching element.

A power conversion device according to a 24th aspect is the power conversion device according to the 23th aspect, in which the control voltage of the first power module is 16.5 V.

A power conversion device according to a 25th aspect is the power conversion device according to the 23th or 24th aspect, and further includes an inverter circuit. The inverter circuit includes a second power module. The second power module incorporates, in one package, a plurality of switching elements that convert DC power into AC power of a predetermined frequency and a control circuit that controls the switching elements. The control voltage of the second power module is smaller than the control voltage of the first power module.

The inverter circuit is connected to a downstream side of the rectifier circuit when viewed from the AC power source side. Therefore, the second power module does not directly receive an input current at a time of recovery from voltage drop or power failure of the power source and an inrush current due to power source frequency fluctuation during operation, and the second power module is not required to have inrush current durability as high as that of the first power module.

Therefore, the control voltage of the second power module can be made smaller than the control voltage of the first power module.

A power conversion device according to a 26th aspect is the power conversion device according to the 25th aspect, in which a control voltage of the second power module is 15.5 V or less.

### BRIEF DESCRIPTION OF THE DRAWINGS

FIG. 1 is a circuit diagram illustrating a configuration of a power conversion device according to an embodiment of the present disclosure.
FIG. 2 is a perspective view of a printed wiring board on which components are mounted.
FIG. 3 is a plan view of a state in which a heat sink illustrated in FIG. 2 is reversed rightward by 180° around a right end in front view.
FIG. 4 is a perspective view of the heat sink and an active filter module illustrated in FIG. 3 as viewed from a front side.
FIG. 5 is a common mode equivalent circuit.
FIG. 6A is a side view of a first printed wiring board assembly.
FIG. 6B is a side view of a second printed wiring board assembly.
FIG. 6C is a side view of a third printed wiring board assembly.
FIG. 7 is a graph for comparing parasitic capacitances between the active filter module and the heat sink in the first printed wiring board assembly, the second printed wiring board assembly, and the third printed wiring board assembly.
FIG. 8A is a plan view of a printed wiring board, illustrating a part of a conductive pattern of a first layer of the printed wiring board.
FIG. 8B is a plan view of the printed wiring board, illustrating a part of a conductive pattern of a second layer of the printed wiring board.
FIG. 8C is a plan view of the printed wiring board, illustrating a part of a conductive pattern of a third layer of the printed wiring board.
FIG. 8D is a plan view of the printed wiring board, illustrating a part of a conductive pattern of a fourth layer of the printed wiring board.
FIG. 9 is a plan view of the printed wiring board, illustrating a positional relationship of individual patterns when the first layer, the second layer, the third layer, and the fourth layer are laminated and viewed from the first layer side toward a laminating direction.
FIG. 10 is a perspective view of the printed wiring board when the printed wiring board is virtually sectioned into three areas, that is, a first area, a second area, and a third area along a Y direction with a long side direction of the printed wiring board as an X direction and a short side direction as the Y direction.
FIG. 11A is a front view of the printed wiring board conveyed on a solder tank, and a first heavy object and a second heavy obj ect having barycenters in the second area of the printed wiring board, when viewed from a conveyance direction.
FIG. 11B is a front view of the printed wiring board conveyed on the solder tank, the first heavy object having a barycenter in the first area of the printed wiring board, and the second heavy object having a barycenter in the third area, when viewed from a conveyance direction.
FIG. 12 is a table illustrating results of an inrush current durability experiment of the active filter module.

### DESCRIPTION OF EMBODIMENTS

### (1) Outline of power conversion device 10

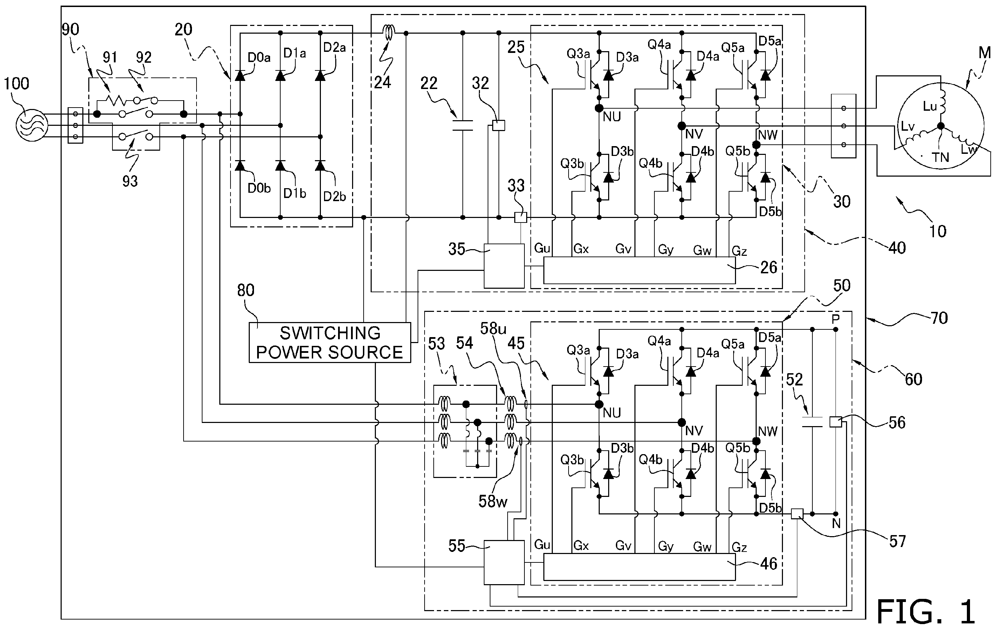

FIG. 1 is a circuit diagram illustrating a configuration of a power conversion device 10 according to an embodiment of the present disclosure. In FIG. 1, the power conversion device 10 includes a rectifier circuit 20, an inverter circuit 40, an active filter circuit 60, a switching power source 80, and one printed wiring board 70.

The rectifier circuit 20 rectifies AC power of an AC power source 100 into DC power. The AC power source 100 outputs a three-phase AC.

The inverter circuit 40 converts the DC power outputted from the rectifier circuit 20 into AC power of a predetermined frequency, and supplies the AC power to a motor M. The motor M is a three-phase AC motor, and drives a compressor provided in a refrigerant circuit of an air conditioner, for example.

The active filter circuit 60 is connected in parallel between the AC power source 100 and the rectifier circuit 20 as a harmonic reduction device. The active filter circuit 60 compensates for a harmonic current having a phase opposite to a harmonic current generated in the inverter circuit 40 on the basis of a current value flowing through the inverter circuit 40 and detected by a current detection unit 33, to reduce a harmonic current flowing from the inverter circuit 40 to a power source line.

### (2) Detailed configuration

### (2-1) Rectifier circuit 20

A rectification unit 21 is configured in a bridge shape by six diodes D0a, D0b, D1a, D1b, D2a, and D2b. Specifically, the diodes D0a and D0b, D1a and D1b, and D2a and D2b are connected in series with each other.

Individual cathode terminals of the diodes D0a, D1a, and D2a are connected to a positive side terminal of a smoothing capacitor 22, and function as a positive side output terminal of the rectifier circuit 20.

Individual anode terminals of the diodes D0b, D1b, and D2b are connected to a negative terminal of the smoothing capacitor 22, and function as a negative output terminal of the rectifier circuit 20.

A connection point of the diode D0a and the diode D0b is connected to one pole (U phase) of the three-phase AC power source 100. A connection point of the diode D1a and the diode D1b is connected to another pole (V phase) of the three-phase AC power source 100. A connection point of the diode D2a and the diode D2b is connected to a remaining one pole (W phase) of the three-phase AC power source 100.

The rectifier circuit 20 rectifies AC power outputted from the three-phase AC power source 100 to generate DC power, and supplies the DC power to the smoothing capacitor 22.

### (2-2) Inverter circuit 40

The inverter circuit 40 includes a reactor 24, the smoothing capacitor 22, an inverter module 30, a voltage detection unit 32, the current detection unit 33, and an inverter microcomputer 35.

### (2-2-1) Reactor 24

The reactor 24 has one end connected to a positive output terminal of the rectifier circuit 20 and another end connected to a positive input terminal of the smoothing capacitor 22.

### (2-2-2) Smoothing capacitor 22

The smoothing capacitor 22 has one end connected to the positive output terminal of the rectifier circuit 20 and another end connected to the negative output terminal of the rectifier circuit 20. The smoothing capacitor 22 smooths a voltage rectified by the rectifier circuit 20.

The voltage smoothed by the smoothing capacitor 22 is supplied to the inverter circuit 40 connected to an output side of the smoothing capacitor 22.

While examples of the capacitor include an electrolytic capacitor, a film capacitor, and a tantalum capacitor, a film capacitor is adopted as the smoothing capacitor 22 in the present embodiment.

The reactor 24 and the smoothing capacitor 22 constitute an LC filter. An inductance of the reactor 24 and a capacitance of the smoothing capacitor 23 are set such that the LC filter attenuates a current component having a frequency same as a frequency of a carrier used to generate a control signal of the inverter circuit 40. Therefore, a current component having the same frequency as the carrier frequency is suppressed from flowing out to the AC power source 100.

### (2-2-3) Inverter module 30

The inverter module 30 incorporates a switching circuit 25 and a control circuit 26, and is formed into one package.

The switching circuit 25 includes a plurality of switching elements that convert DC power into AC power of a predetermined frequency. The control circuit 26 controls the switching elements.

### (2-2-3-1) Switching circuit 25

In the switching circuit 25, three upper and lower arms individually corresponding to U-phase, V-phase, and W-phase drive coils Lu, Lv, and Lw of the motor M are connected in parallel to each other and to the output side of the smoothing capacitor 22.

In FIG. 1, the switching circuit 25 includes a plurality of insulated gate bipolar transistors (IGBTs, hereinafter, simply referred to as transistors) Q3a, Q3b, Q4a, Q4b, Q5a, and Q5b, and a plurality of reflux diodes D3a, D3b, D4a, D4b, D5a, and D5b.

The transistors Q3a and Q3b, the transistors Q4a and Q4b, and the transistors Q5a and Q5b are respectively connected in series each other to constitute each upper and lower arms, and output wires extend from each connection points NU, NV, and NW thus formed to the drive coils Lu, Lv, and Lw for the corresponding phases.

The diodes D3a to D5b are respectively connected in parallel with the transistors Q3a to Q5b with a collector terminal of each transistor connected to a cathode terminal of the corresponding diode and an emitter terminal of each transistor connected to an anode terminal of the corresponding diode. These transistors and the corresponding diodes, which are respectively connected in parallel, constitute a switching element.

The switching circuit 25 generates a drive voltage for driving the motor M, by applying a DC voltage from the smoothing capacitor 22 and turning on and off each of the transistors Q3a to Q5b at a timing instructed by the control circuit 26. This drive voltage is outputted from each of the connection points NU, NV, and NW of each of the transistors Q3a and Q3b, Q4a and Q4b, and Q5a and Q5b to the drive coils Lu, Lv, and Lw of the motor M.

### (2-2-3-2) Control circuit 26

The control circuit 26 changes on and off states of each of the transistors Q3a to Q5b of the switching circuit 25 on the basis of a command voltage from the inverter microcomputer 35.

Specifically, the control circuit 26 generates gate control voltages Gu, Gx, Gv, Gy, Gw, and Gz such that a pulse drive voltage having any duty ratio is outputted from the switching circuit 25 to the motor M. The duty ratio is determined by the inverter microcomputer 35.

The gate control voltages Gu, Gx, Gv, Gy, Gw, and Gz thus generated are respectively applied to gate terminals of the transistors Q3a, Q3b, Q4a, Q4b, Q5a, and Q5b.

### (2-2-4) Voltage detection unit 32

The voltage detection unit 32 is connected to the output side of the smoothing capacitor 22, and detects a voltage across terminals of the smoothing capacitor 22. For example, the voltage detection unit 32 is configured such that two resistances connected in series to each other are connected in parallel to the smoothing capacitor 22, and a voltage across terminals of the smoothing capacitor 22 is divided. A voltage value at a connection point between the two resistances is inputted to the inverter microcomputer 35.

### (2-2-5) Current detection unit 33

The current detection unit 33 is connected between the smoothing capacitor 22 and the switching circuit 25, and to a negative-side output terminal of the smoothing capacitor 22. After the motor M is activated, the current detection unit 33 detects a motor current flowing through the motor M as a total value of currents for three phases.

The current detection unit 33 may include, for example, an amplifier circuit using a shunt resistance and an operational amplifier that amplifies a voltage across terminals of the resistance. The motor current detected by the current detection unit 33 is inputted to the inverter microcomputer 35.

### (2-2-6) Inverter microcomputer 35

The inverter microcomputer 35 is connected to the voltage detection unit 32, the current detection unit 33, and the control circuit 26. In the present embodiment, the inverter microcomputer 35 drives the motor M in a rotor position sensorless method. Note that a sensor method may be adopted without limiting to the rotor position sensorless method.

Further, the inverter microcomputer 35 also monitors a detection value of the voltage detection unit 32, and performs protection control to turn off the transistors Q3a to Q5b when the detection value of the voltage detection unit 32 exceeds a predetermined threshold value.

### (2-3) Active filter circuit 60

The active filter circuit 60 includes an active filter module 50, a first capacitor 52, a carrier filter 53, a connection reactor 54, an active filter microcomputer 55, a voltage detection unit 56, a current detection unit 57, a U-phase current detection unit 58u, and a W-phase current detection unit 58w.

### (2-3-1) Active filter module 50

The active filter module 50 incorporates a switching circuit 45 and a control circuit 46, and is formed into one package.

### (2-3-1-1) Switching circuit 45

The switching circuit 45 includes a plurality of switching elements that generate a compensation current for suppressing a harmonic current.

By controlling a switching operation with the control circuit 46 to control a current flowing between the AC power source 100 and the switching circuit 45, the switching circuit 45 cancels a harmonic current flowing from the inverter circuit 40 to a power source line.

Since a configuration of the switching circuit 45 is the same as the configuration of the switching circuit 25 of the inverter module 30, a transistor and a diode which are components are denoted by the same reference numerals as the transistor and the diode of the switching circuit 25 of the inverter module 30, and the description thereof is omitted.

### (2-3-1-2) Control circuit 46

The control circuit 46 controls the switching elements. Since a configuration of the control circuit 46 is also the same as the configuration of the control circuit 26 of the inverter module 30, the same reference numerals as those of the control circuit 26 of the inverter module 30 are given, and the description thereof is omitted.

### (2-3-2) First capacitor 52

The first capacitor 52 is a capacitor that smooths output power of the switching circuit 45.

### (2-3-3) Carrier filter 53

The carrier filter 53 removes noise associated with switching of the switching circuit 45. Specifically, the carrier filter 53 removes a high-frequency component of a compensation current generated by switching of the switching circuit 45.

### (2-3-4) Connection reactor 54

The connection reactor 54 interconnects the switching circuit 45 and a power source line.

### (2-3-5) Active filter microcomputer 55

The active filter microcomputer 55 is connected to the voltage detection unit 56, the current detection unit 57, the U-phase current detection unit 58u, the W-phase current detection unit 58w, and the control circuit 46.

Further, the active filter microcomputer 55 sends a command voltage for switching on/off of each switching element of the switching circuit 45 to the control circuit 46, on the basis of each detection value of the voltage detection unit 56, the current detection unit 57, the U-phase current detection unit 58u, and the W-phase current detection unit 58w.

### (2-3-6) Voltage detection unit 56

The voltage detection unit 56 is connected to an output side of the first capacitor 52, and detects a voltage across terminals of the first capacitor 52. For example, the voltage detection unit 56 is configured such that two resistances connected in series to each other are connected in parallel to the first capacitor 52, and a voltage across terminals of the first capacitor 52 is divided. A voltage value at a connection point between the two resistances is inputted to the active filter microcomputer 55.

### (2-3-7) Current detection unit 57

The current detection unit 57 is connected between the first capacitor 52 and the switching circuit 45, and to a negative-side output terminal of the first capacitor 52. The current detection unit 57 detects a bus current of the switching circuit 45.

The current detection unit 57 may include, for example, an amplifier circuit using a shunt resistance and an operational amplifier that amplifies a voltage across terminals of the resistance. A current detected by the current detection unit 57 is inputted to the active filter microcomputer 55.

### (2-3-8) U-phase current detection unit 58u and W-phase current detection unit 58w

The U-phase current detection unit 58u detects a compensation current flowing in the U phase. The W-phase current detection unit 58w detects a compensation current flowing in the W phase.

### (2-4) Switching power source 80

The switching power source 80 is connected to an output side of the rectifier circuit 20, and supplies power to the inverter microcomputer 35 and the control circuit 26 of the inverter module 30. Further, the switching power source 80 also supplies power to the active filter microcomputer 55 and the control circuit 46 of the active filter module 50.

A connection position of the switching power source 80 is not limited to the output side of the rectifier circuit 20, and may be, for example, closer to the AC power source 100 than a current-limiting circuit 90.

### (2-5) Current-limiting circuit 90

The current-limiting circuit 90 includes a current-limiting resistance 91, a current-limiting relay 92, and a main relay 93. The current-limiting circuit 90 not only limits a current flowing through the smoothing capacitor 22 but also serves as a current-limiting circuit that limits a current flowing through the first capacitor 52 of the active filter circuit 60. Therefore, since the active filter circuit 60 does not need to individually include a current-limiting circuit, the power conversion device 10 can be reduced in size, weight, and cost.

### (2-5-1) Current-limiting resistance 91

The current-limiting resistance 91 is connected on one power source line among three-phase power source lines connecting the AC power source 100 and the rectifier circuit 20.

The current-limiting resistance 91 is provided to gradually charge the smoothing capacitor 22 and the first capacitor 52. A voltage of the AC power source 100 is applied to the rectifier circuit 20 via the current-limiting resistance 91, and a current according to a resistance value of the current-limiting resistance 91 and an AC voltage of the AC power source 100 flows through the smoothing capacitor 22 and the first capacitor 52 to gradually charge the smoothing capacitor 22 and the first capacitor 52.

### (2-5-2) Current-limiting relay 92

The current-limiting relay 92 is connected in series with the current-limiting resistance 91 on a power source line to which the current-limiting resistance 91 is connected.

Between a contact points of the current-limiting relay 92 is in a normally on state, and the current-limiting resistance 91 and the rectifier circuit 20 are brought into a conductive state so as to bypass the main relay 93 when the motor M is activated. The current-limiting relay 92 is turned off after the smoothing capacitor 22 is appropriately charged.

### (2-5-3) Main relay 93

The main relay 93 is connected in parallel with the current-limiting resistance 91 and the current-limiting relay 92 on a power source line to which the current-limiting resistance 91 and the current-limiting relay 92 are connected, among three-phase power source lines connecting the AC power source 100 and the rectifier circuit 20. Further, the main relay 93 is also connected to a power source line to which the current-limiting resistance 91 and the current-limiting relay 92 are not connected.

When power of the AC power source 100 is suddenly supplied to the rectifier circuit 20, components such as the smoothing capacitor 22 may be destroyed by an excessive inrush current. Therefore, normally, the main relay 93 turns off between the contact points and does not conduct a power source line connecting the AC power source 100 and the rectifier circuit 20.

The main relay 93 is turned on after the smoothing capacitor 22 is appropriately charged and the current-limiting relay 92 is turned off.

### (2-6) Printed wiring board 70

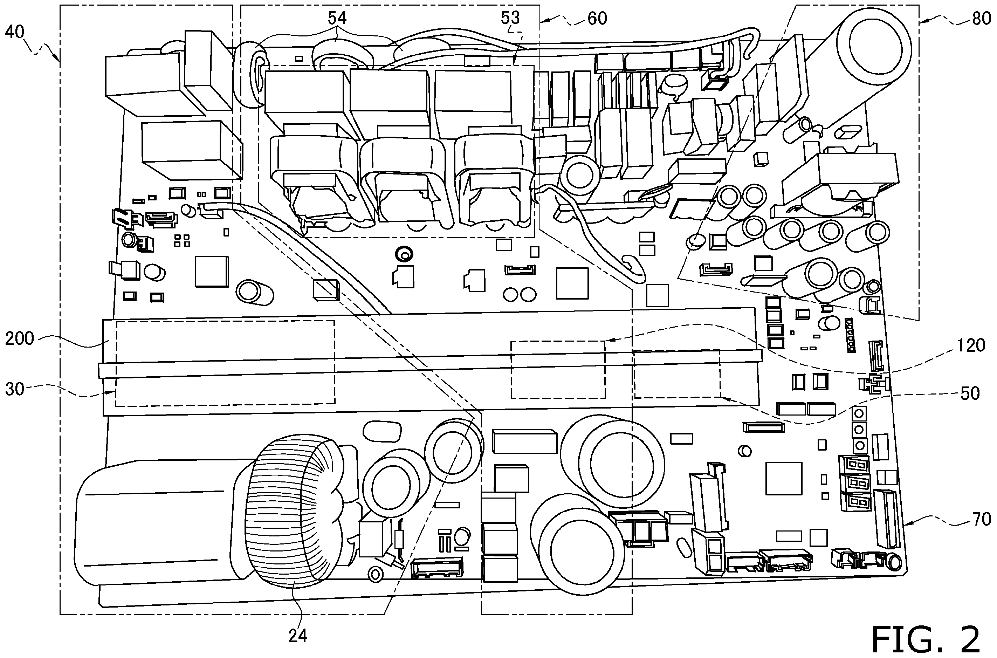

FIG. 2 is a perspective view of the printed wiring board 70 on which components are mounted. In FIG. 2, various components constituting the inverter circuit 40, the active filter circuit 60, the switching power source 80, and the like illustrated in FIG. 1 are mounted on the printed wiring board 70. This eliminates necessity of a harness for connecting individual circuits, reducing in size and cost of the power conversion device 10.

### (2-7) Heat sink 200

As illustrated in FIG. 2, a heat sink 200 is installed in the inverter module 30 in order to promote heat dissipation from the switching circuit 25 at a high temperature.

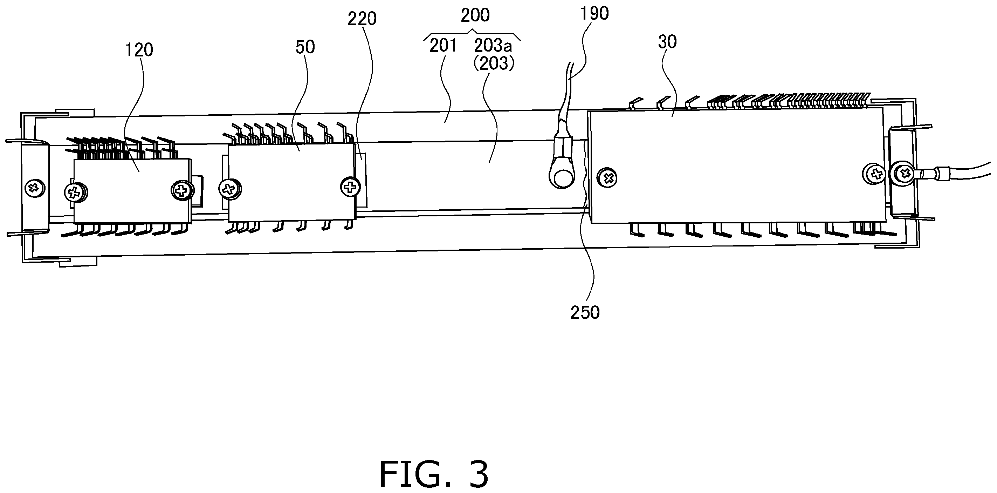

FIG. 3 is a plan view of the heat sink 200 when the heat sink 200 illustrated in FIG. 2 is reversed rightward by 180° around a right end in a front view. In FIG. 3, not only the inverter module 30 but also the active filter module 50 and a power module 120 for fan are mounted on the heat sink 200.

The heat sink 200 is also used as a cooler that cools the active filter module 50 and the power module 120 for fan.

Since the inverter module 30, the active filter module 50, and the power module 120 for fan can be cooled by the one heat sink 200, the power conversion device 10 can be reduced in size, weight, and cost.

The heat sink 200 includes a cooling portion 201 and a heat absorbing portion 203. To the cooling portion 201, a heat transfer tube through which a refrigerant flows is attached. However, in a case of an air cooling system in which a fan blows air to the cooling portion 201 to promote heat dissipation, the heat transfer tube is unnecessary.

The heat sink 200 is grounded from the heat absorbing portion 203 via a ground wire 190. The heat absorbing portion 203 transfers heat from the inverter module 30, the active filter module 50, and the power module 120 for fan to the cooling portion 201.

The heat absorbing portion 203 includes a heat absorbing surface 203a surrounded by a long side parallel to a longitudinal direction of the cooling portion 201 and a short side orthogonal to the longitudinal direction. The inverter module 30, the active filter module 50, and the power module 120 for fan are attached to the heat absorbing surface 203a of the heat absorbing portion 203.

The inverter module 30, the active filter module 50, and the power module 120 for fan are all rectangular parallelepipeds.

A length of a short side of the active filter module 50 is equal to or more than a short side of the heat absorbing surface 203a and equal to or less than a short side of the inverter module 30.

Since the active filter module 50 is smaller in package than the inverter module 30, a distance between a terminal of the active filter module 50 and the heat absorbing portion 203 becomes short when the active filter module 50 is attached to the heat absorbing portion 203, which is more disadvantageous than the inverter module 30 in terms of a creepage distance and a spatial distance. Therefore, a first heat transfer member 220 that increases an impedance between the active filter module 50 and the heat sink 200 is interposed to overcome the disadvantage.

### (2-8) First heat transfer member 220

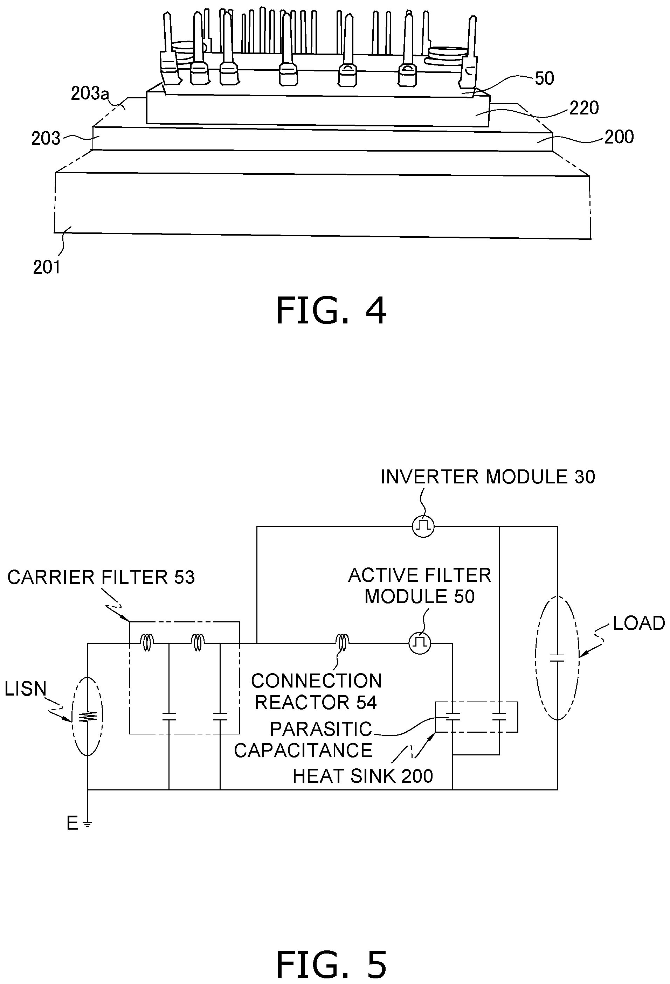

FIG. 4 is a perspective view of the heat sink 200 and the active filter module 50 illustrated in FIG. 3 when viewed from a front side. In FIG. 4, the first heat transfer member 220 is arranged between the heat sink 200 and the active filter module 50.

The first heat transfer member 220 is made of aluminum or aluminum alloy. A function of the first heat transfer member 220 is to adjust a height with respect to the inverter module 30 and to transfer heat of the active filter module 50 to the heat sink 200.

### (2-8-1) Height adjustment function

As illustrated in FIG. 3, in the present embodiment, the heat sink 200 is also used as a heat sink that cools the inverter module 30, the active filter module 50, and the power module 120 for fan mounted on one printed wiring board 70.

The inverter module 30, the active filter module 50, and the power module 120 for fan have different heights from a mounting surface of the printed wiring board 70, and the inverter module 30 has the highest height from the mounting surface of the printed wiring board 70 among the three modules.

Therefore, the heat sink 200 is configured to be parallel to the mounting surface of the printed wiring board 70 with a height adjusting member interposed between the heat sink 200 and the heat dissipation surfaces of the active filter module 50 and the power module 120 for fan.

A height adjustment member arranged between the heat dissipation surface of the active filter module 50 and the heat sink 200 is the first heat transfer member 220. A thickness of the first heat transfer member 220 is not simply determined by a facing distance between the heat dissipation surface of the active filter module 50 and the heat sink 200.

The thickness of the first heat transfer member 220 is determined after suitability is determined based on a physical quantity such as a potential difference between the terminal of the active filter module 50 and the heat sink 200.

Therefore, when the thickness of the first heat transfer member 220 is not appropriate from the viewpoint of the potential difference, the facing distance itself is also readjusted. This allows the thickness of the first heat transfer member 220 to be appropriately set without excess or deficiency.

### (2-8-2) Heat transfer function

Since the first heat transfer member 220 is interposed between the heat dissipation surface of the active filter module 50 and the heat sink 200, heat must be efficiently transferred from the active filter module 50 to the heat sink 200. Therefore, the first heat transfer member 220 is made of a material having high heat conductivity (for example, "aluminum" or "aluminum alloy", "copper" or "copper alloy", "ceramic material", or the like).

In the present embodiment, aluminum or aluminum alloy is adopted as the first heat transfer member 220.

### (2-8-3) Countermeasure against common mode noise by first heat transfer member 220

FIG. 5 is a common mode equivalent circuit. In FIG. 5, a LISN is a noise measurement device and is not a component of the circuit of FIG. 1.

The active filter module 50 cancels a harmonic component generated by the inverter module 30 by switching.

Since a parasitic capacitance is formed between the active filter module 50 and the heat sink 200, common mode noise caused by a resonance frequency of the connection reactor 54 during operation of the active filter module 50 escapes from the active filter module 50 to the earth through the heat sink 200, which may deteriorate EMI (a noise terminal voltage).

Examples of a countermeasure against the common mode noise include deviating the resonance frequency from a target frequency band of a noise terminal voltage by increasing a reactance value of the connection reactor 54, or reinforcing the carrier filter 53, but these lead to an increase in size of the printed wiring board 70 and an increase in size of electric components.

Therefore, in the present embodiment, by increasing a resistance value between the active filter module 50 and the heat sink 200, a parasitic capacitance between the active filter module 50 and the heat sink 200 is reduced, and the common mode noise is suppressed.

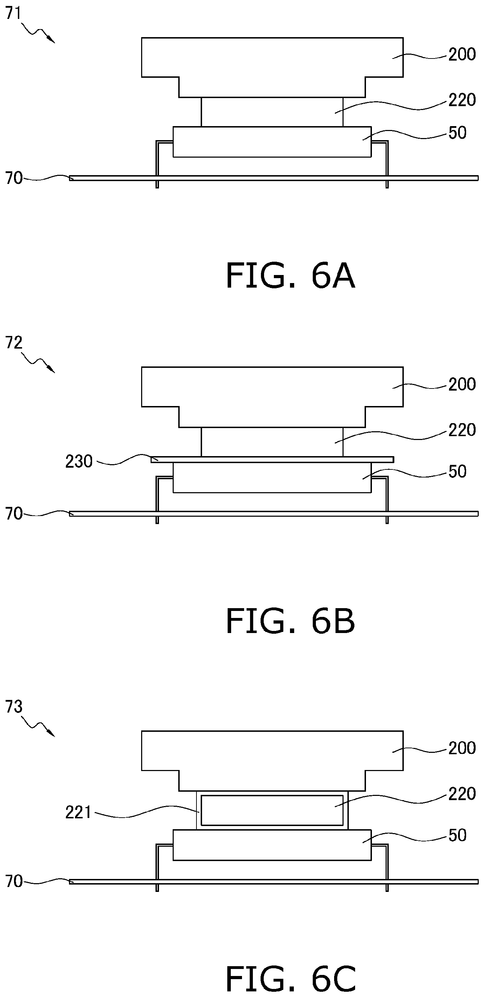

FIG. 6A is a side view of a first printed wiring board assembly 71. In FIG. 6A, in the first printed wiring board assembly 71, the first heat transfer member 220 is interposed between the active filter module 50 and the heat sink 200.

FIG. 6B is a side view of a second printed wiring board assembly 72. In FIG. 6B, in the second printed wiring board assembly 72, the first heat transfer member 220 and an insulating sheet 230 are interposed between the active filter module 50 and the heat sink 200.

FIG. 6C is a side view of a third printed wiring board assembly 73. In FIG. 6C, in the third printed wiring board assembly 73, the first heat transfer member 220 subjected to alumite treatment is interposed between the active filter module 50 and the heat sink 200.

The alumite treatment is surface treatment in which an aluminum surface is electrolyzed with an anode to generate an oxide film. Therefore, a surface of the first heat transfer member 220 is covered with an oxide film 221.

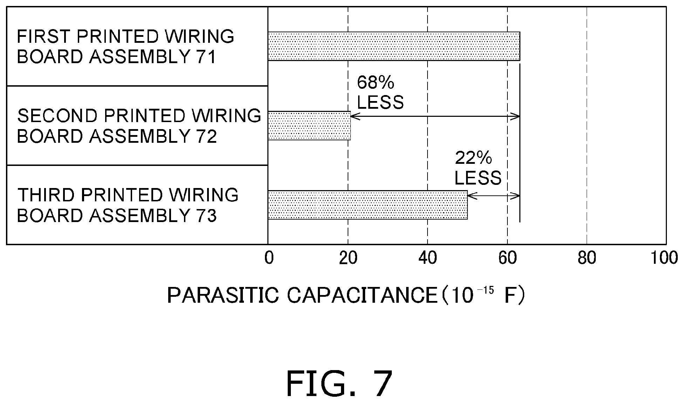

FIG. 7 is a graph for comparing parasitic capacitances between the active filter module 50 and the heat sink 200 in the first printed wiring board assembly 71, the second printed wiring board assembly 72, and the third printed wiring board assembly 73.

In FIG. 7, the parasitic capacitance is the largest in 62 of the first printed wiring board assembly 71, and is less in order of 50 of the third printed wiring board assembly 73 and 21 of the second printed wiring board assembly 72.

When the parasitic capacitance between the active filter module 50 and the heat sink 200 is large, a ground impedance of the heat sink 200 is small. Therefore, a noise component escapes through an earth path and does not pass through the carrier filter 53, which deteriorates EMI when the active filter module 50 operates.

On the other hand, when the parasitic capacitance between the active filter module 50 and the heat sink 200 is small, the ground impedance of the heat sink 200 is large. Therefore, the noise component passes through the carrier filter 53, which reduces the noise component and improves deterioration of EMI during operation of the active filter module 50.

In the present embodiment, in consideration of cost effectiveness, the first heat transfer member 220 subjected to the alumite treatment in FIG. 6C is interposed between the active filter module 50 and the heat sink 200 to suppress the common mode noise.

### (3) Detailed configuration of printed wiring board 70

The printed wiring board 70 is a multilayer printed wiring board having a plurality of conductive pattern layers laminated with an insulator layer interposed in between.

In the present embodiment, when a surface on which various electrical components constituting the inverter circuit 40, the active filter circuit 60, and the switching power source 80 are mounted faces upward, conductive pattern layers of a first layer, a second layer, a third layer, and a fourth layer are laminated from upward to downward.

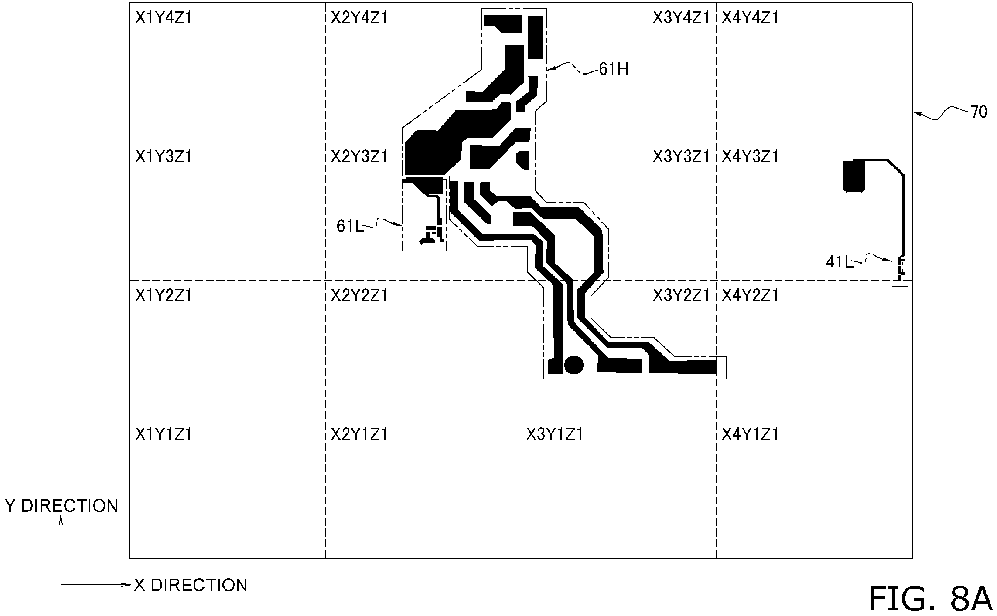

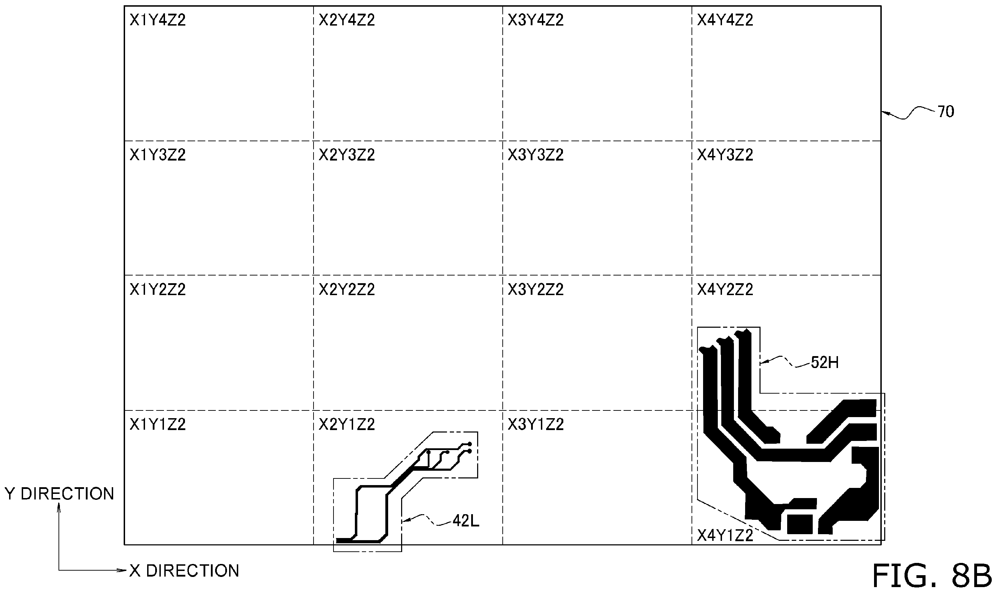

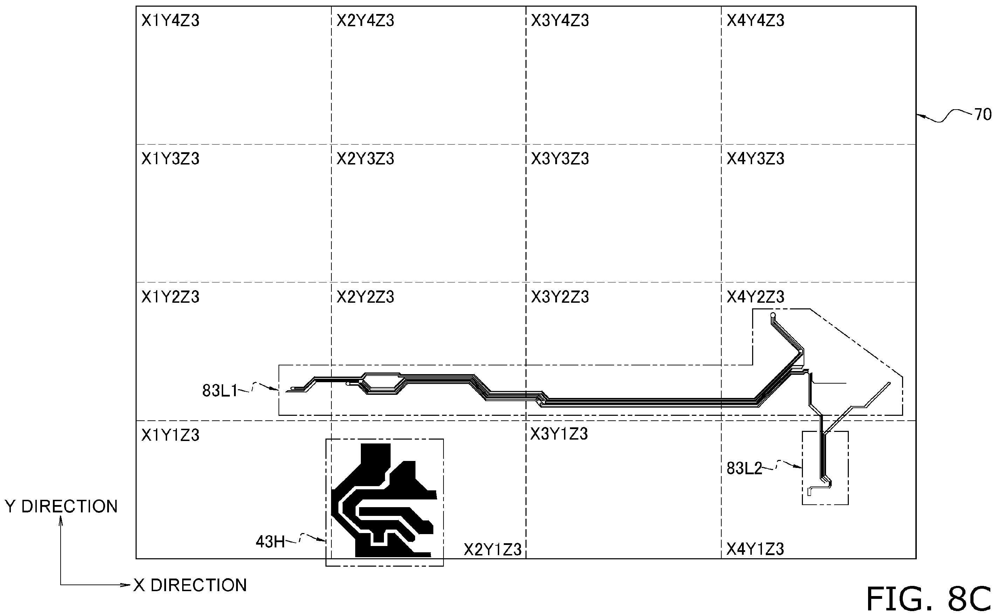

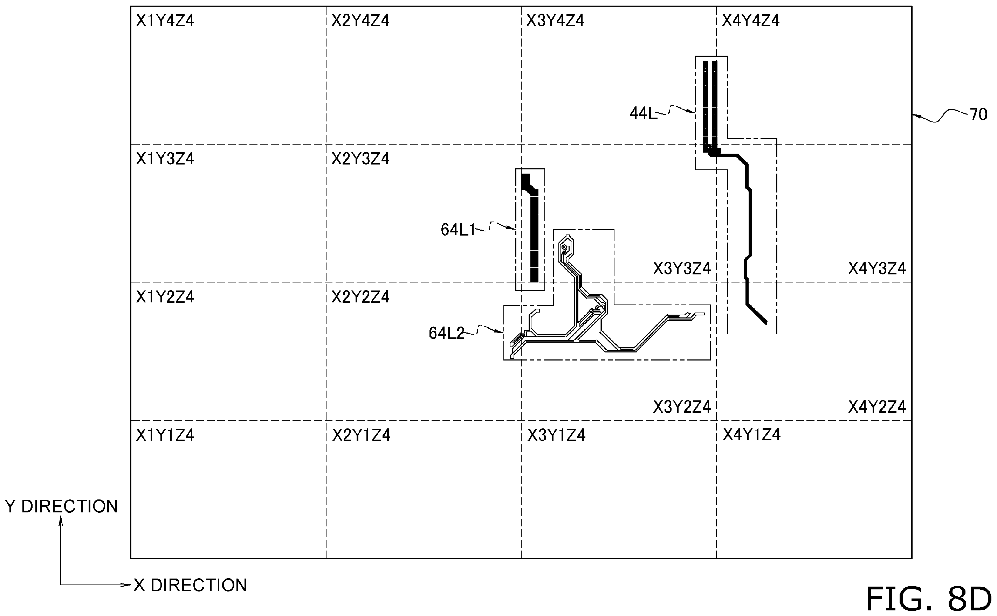

FIGS. 8A, 8B, 8C, and 8D are plan views of the printed wiring board 70 illustrating a part of a conductive pattern of each of a first layer Z1, a second layer Z2, a third layer Z3, and a fourth layer Z4 of the printed wiring board 70.

In FIGS. 8A, 8B, 8C, and 8D, for convenience of description, each layer is sectioned into 16 regions in plan view, and each region is denoted by a reference sign indicating a position thereof.

For example, in plan view of FIGS. 8A, 8B, 8C, and 8D, assuming that a position of a lower left end region is X1, the number after X increases by one every time the region is moved by one in the X direction. Further, every time the region is moved by one in the Y direction from Y1, the number after Y increases by one.

Further, every time the layer moves by one in the laminating direction from Z1, the number after Z increases by one. As a specific example, a region at an upper right end of the fourth layer Z4 in FIG. 8D in plan view is indicated as a region X4Y4Z4.

When the layers of FIGS. 8A, 8B, 8C, and 8D are laminated, regions having the same number after X and the same number after Y completely overlap with each other when viewed from the laminating direction.

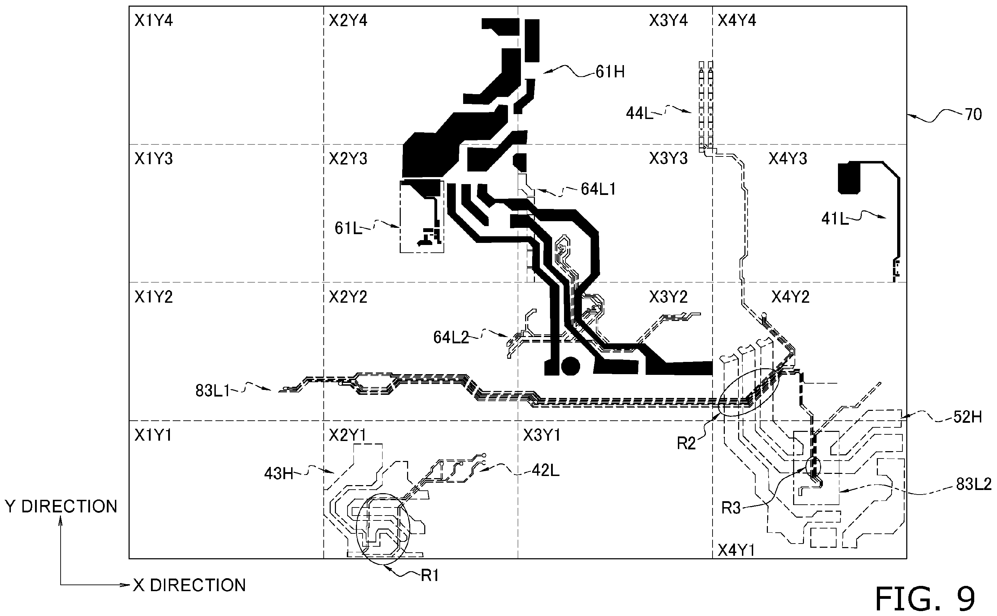

FIG. 9 is a plan view of the printed wiring board 70, illustrating a positional relationship of individual patterns when the first layer Z1, the second layer Z2, the third layer Z3, and the fourth layer Z4 are laminated and viewed from the first layer Z1 side toward the laminating direction.

### (3-1) First layer Z1

In the first layer Z1, a low-voltage pattern for current detection is formed so as not to overlap with a high-voltage pattern formed in another layer when viewed from the laminating direction.

### (3-1-1) First-A low-voltage pattern 41L

In FIG. 8A, in the first layer Z1, a first-A low-voltage pattern 41L is formed in a region X4Y3Z1. The first-A low-voltage pattern 41L is a conductive pattern to be used for detecting a current of the inverter module 30. The current of the inverter module 30 is detected via the current detection unit 33.

There is no high-voltage pattern in a region X4Y3Z2 of the second layer Z2, a region X4Y3Z3 of the third layer Z3, and a region X4Y3Z4 of the fourth layer Z4 overlapping with the region X4Y3Z1 where the first-A low-voltage pattern 41L exists as viewed in the laminating direction.

For example, even when the active filter circuit 60 operates, noise is not superimposed on the first-A low-voltage pattern 41L. Therefore, a current of the inverter circuit 40 can be accurately detected.

### (3-1-2) First-B low-voltage pattern 61L

Further, in the first layer Z1, a first-B low-voltage pattern 61L is formed in a region X2Y3Z1. The first-B low-voltage pattern 61L is a conductive pattern to be used for detecting a current of the active filter module 50. The current of the active filter module 50 is detected via the current detection unit 57.

There is no high-voltage pattern in a region X2Y3Z2 of the second layer Z2, a region X2Y3Z3 of the third layer Z3, and a region X2Y3Z4 of the fourth layer Z4 overlapping with the region X2Y3Z1 where the first-B low-voltage pattern 61L exists as viewed in the laminating direction.

For example, even when the inverter circuit 40 operates, noise is not superimposed on the first-B low-voltage pattern 61L. Therefore, a current of the active filter module 50 can be accurately detected.

### (3-1-3) First high-voltage pattern 61H

Further, in the first layer Z1, a first high-voltage pattern 61H is formed in regions X2Y4Z1, X3Y4Z1, X2Y3Z1, X3Y3Z1, and X3Y2Z1. The first high-voltage pattern 61H is a high-voltage line connecting the output side of the rectifier circuit 20 and an input side of the active filter circuit 60.

### (3-2) Second layer Z2

In the second layer, a low-voltage pattern other than those for current detection and voltage detection is formed so as to overlap with a high-voltage pattern formed in another layer when viewed from the laminating direction.

### (3-2-1) Second low-voltage pattern 42L

In FIG. 8B, in the second layer Z2, a second low-voltage pattern 42L is formed in a region X2Y1Z2. The second low-voltage pattern 42L is a low-voltage line to be used for transmitting an on/off signal of each relay for refrigerant control.

In a region X2Y1Z3 of the third layer Z3 overlapping with the region X2Y1Z2 where the second low-voltage pattern 42L exists as viewed in the laminating direction, there is a third-A high-voltage pattern 43H that is not the inverter circuit 40 and the active filter circuit 60 (for example, a high-voltage pattern of a switching power source circuit, an outdoor fan circuit, a refrigerant control circuit, a connection circuit to an indoor unit, and the like in a case of an air conditioner), and the second low-voltage pattern 42L and the third-A high-voltage pattern 43H partially overlap with each other as viewed in the laminating direction as illustrated in an R1 portion of FIG. 9.

Therefore, a signal passing through the second low-voltage pattern 42L is subjected to noise removal by a CR filter before entering a microcomputer and a relay.

As described above, for the second low-voltage pattern 42L irrelevant to detection of a current or a voltage, a degree of freedom in designing the printed wiring board 70 is increased by allowing a part of the second low-voltage pattern 42L to overlap with the third-A high-voltage pattern 43H as viewed in the laminating direction.

### (3-2-2) Second high-voltage pattern 52H

Further, in the second layer Z2, a second high-voltage pattern 52H is formed in regions X4Y2Z2 and X4Y1Z2. A high voltage to be supplied to the inverter circuit 40 and the active filter circuit 60 is supplied to the second high-voltage pattern 52H.

### (3-3) Third layer Z3

In the third layer, a part of a low-voltage pattern other than those for current detection and voltage detection is formed so as to overlap with a high-voltage pattern formed in another layer when viewed from the laminating direction.

### (3-3-1) Third-A low-voltage pattern 83L1

In FIG. 8C, in the third layer Z3, a third-A low-voltage pattern 83L is formed in regions X1Y2Z3, X2Y2Z3, X3Y2Z3, and X4Y2Z3. The third-A low-voltage pattern 83L is a supply line for each output voltage (5 V, 15 V, and the like) generated by the switching power source 80.

The second high-voltage pattern 52H exists in the region X4Y2Z2 of the second layer Z2 overlapping with the region X4Y2Z3 in which a part of the third-A low-voltage pattern 83L1 exists as viewed in the laminating direction, and the third-A low-voltage pattern 83L1 and the second high-voltage pattern 52H partially overlap with each other as viewed in the laminating direction, as illustrated in a portion R2 of FIG. 9.

Therefore, a signal passing through the third-A low-voltage pattern 83L1 is subjected to noise removal by a CR filter before entering a microcomputer and a power module.

As described above, for the third-A low-voltage pattern 83L1 irrelevant to the detection of the current or the voltage, a degree of freedom in designing the printed wiring board 70 is increased by allowing a part of the third-A low-voltage pattern 83L1 to overlap with the second high-voltage pattern 52H as viewed in the laminating direction.

### (3-3-2) Third-B low-voltage pattern 83L2

In FIG. 8C, in the third layer Z3, a third-B low-voltage pattern 83L2 is formed in a region X4Y1Z3. The third-B low-voltage pattern 83L2 is a low-voltage line to be used for transmitting an on/off signal of the main relay 93.

The second high-voltage pattern 52H is exists in the region X4Y1Z2 of the second layer Z2 overlapping with the region X4Y1Z3 in which the third-B low-voltage pattern 83L2 exists as viewed in the laminating direction, and the third-B low-voltage pattern 83L2 and the second high-voltage pattern 52H partially overlap with each other as viewed in the laminating direction, as illustrated in the R3 portion of FIG. 9.

Therefore, a signal passing through the third-B low-voltage pattern 83L2 is subjected to noise removal by a CR filter before entering a microcomputer and a relay.

As described above, for the third-B low-voltage pattern 83L2 irrelevant to the detection of the current or the voltage, a degree of freedom in designing the printed wiring board 70 is increased by allowing a part of the third-B low-voltage pattern 83L2 to overlap with the second high-voltage pattern 52H as viewed in the laminating direction.

### (3-3-3) Third-A high-voltage pattern 43H

Further, in the third layer Z3, the third-A high-voltage pattern 43H is formed in the region X2Y1Z3. The third-A high-voltage pattern 43H is a high-voltage line that is not the inverter circuit 40 and the active filter circuit 60 (for example, a high-voltage pattern of a switching power source circuit, an outdoor fan circuit, a refrigerant control circuit, a connection circuit to an indoor unit, and the like in a case of an air conditioner).

### (3-4) Fourth layer Z4

In the fourth layer Z4, low-voltage patterns for voltage detection and current detection are formed so as not to overlap with a high-voltage pattern formed in another layer when viewed from the laminating direction.

### (3-4-1) Fourth-A low-voltage pattern 44L

In FIG. 8D, in the fourth layer Z4, a fourth-A low-voltage pattern 44L is formed in regions X3Y4Z4, X4Y4Z4, X4Y3Z4, and X4Y2Z4. The fourth-A low-voltage pattern 44L is a conductive pattern to be used for detecting a voltage of the inverter module 30. The voltage of the inverter module 30 is detected via the voltage detection unit 32.

In the region X4Y3Z1 of the first layer, the region X4Y3Z2 of the second layer Z2, and the region X4Y3Z3 of the third layer Z3 overlapping with the region X4Y3Z4 where a part of the fourth-A low-voltage pattern 44L exists as viewed in the laminating direction, there is no high-voltage pattern that overlaps with a part of the fourth-A low-voltage pattern 44L as viewed in the laminating direction. Therefore, for example, even when the active filter circuit 60 operates, noise is not superimposed on the fourth-A low-voltage pattern 44L. Therefore, a voltage of the inverter circuit 40 can be accurately detected.

### (3-4-2) Fourth-B low-voltage pattern 64L1

Further, in the fourth layer Z4, a fourth-B low-voltage pattern 64L1 is formed in a region X3Y3Z4. The fourth-B low-voltage pattern 64L1 is a conductive pattern to be used for detecting a voltage of the active filter circuit 60. The voltage of the active filter circuit 60 is detected via the voltage detection unit 56.

A part of the first high-voltage pattern 61H exists in the region X3Y3Z1 of the first layer Z1 overlapping with the region X3Y3Z4 where the fourth-B low-voltage pattern 64L1 exists as viewed in the laminating direction. Therefore, the fourth-B low-voltage pattern 64L1 overlaps with a part of the first high-voltage pattern 61H as viewed in the laminating direction.

However, the first high-voltage pattern 61H is a high-voltage line connecting the output side of the rectifier circuit 20 and the input side of the active filter circuit 60, and both the first high-voltage pattern 61H and the fourth-B low-voltage pattern 64L1 belong to the active filter circuit 60.

Therefore, there is no influence of noise generated when the fourth-B low-voltage pattern 64L1 overlaps with another high-voltage pattern as viewed in the laminating direction.

Therefore, for example, even when the inverter circuit 40 operates, noise is not superimposed on the fourth-B low-voltage pattern 64L. Therefore, a voltage of the active filter circuit 60 can be accurately detected.

As described above, in the conductive patterns belonging to the same circuit, the low-voltage pattern for voltage or current detection may overlap with the high-voltage pattern in the laminating direction.

As a modification, for example, a case is conceivable in which a low-voltage pattern for voltage or current detection belonging to the inverter circuit 40 overlaps with a high-voltage pattern belonging to the inverter circuit 40 in the laminating direction. Even in such a case, there is no influence of noise generated in overlapping with another high-voltage pattern not belonging to the inverter circuit 40 as viewed in the laminating direction.

### (3-4-3) Fourth-C low-voltage pattern 64L2

Further, in the fourth layer Z4, a fourth-C low-voltage pattern 64L2 is formed in regions X3Y3Z4, X2Y2Z4, and X3Y2Z4. The fourth-C low-voltage pattern 64L2 is a conductive pattern to be used for detecting a current of the active filter circuit 60. The current of the active filter circuit 60 is detected via the U-phase current detection unit 58u and the W-phase current detection unit 58w.

A part of the first high-voltage pattern 61H exists in the region X3Y2Z1 of the first layer Z1 overlapping with the region X3Y2Z4 where a part of the fourth-C low-voltage pattern 64L2 exists as viewed in the laminating direction. Therefore, the fourth-C low-voltage pattern 64L2 overlaps with a part of the first high-voltage pattern 61H as viewed in the laminating direction.

However, the first high-voltage pattern 61H is a high-voltage line connecting the output side of the rectifier circuit 20 and the input side of the active filter circuit 60, and both the first high-voltage pattern 61H and the fourth-C low-voltage pattern 64L2 belong to the active filter circuit 60.

Therefore, there is no influence of noise generated when the fourth-C low-voltage pattern 64L2 overlaps with another high-voltage pattern as viewed in the laminating direction.

Therefore, for example, even when the inverter circuit 40 operates, noise is not superimposed on the fourth-C low-voltage pattern 64L2. Therefore, a current of the active filter circuit 60 can be accurately detected.

### (4) Component arrangement of printed wiring board 70

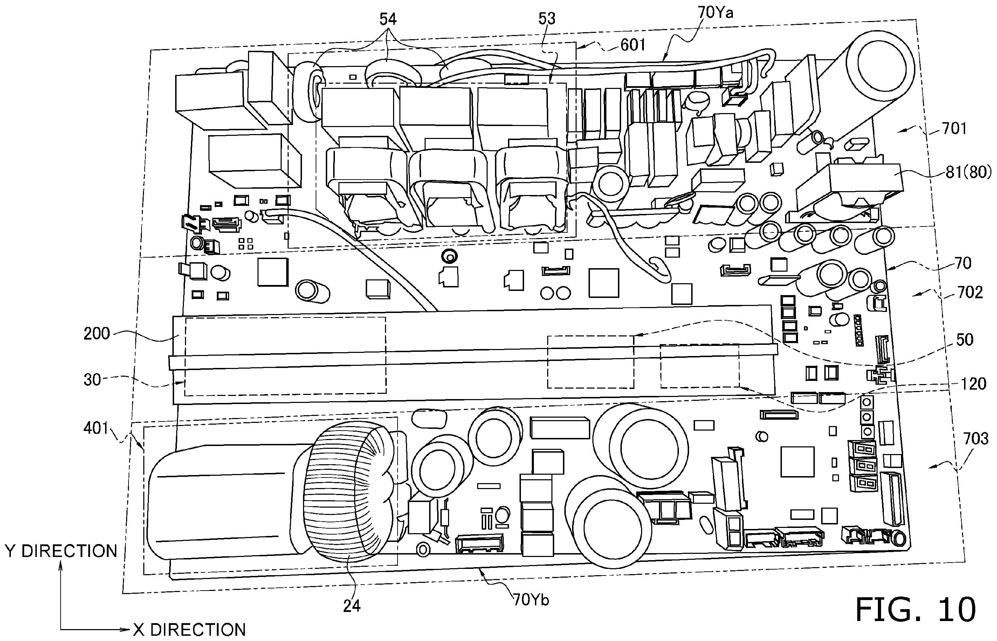

FIG. 10 is a perspective view of the printed wiring board 70 when a long side direction of the printed wiring board 70 is an X direction, and a short side direction is a Y direction, and the printed wiring board 70 is virtually sectioned into three areas along the Y direction, that is, a first area 701, a second area 702, and a third area 703.

The first area 701 is a range from a first end 70Ya, which is one end of the printed wiring board 70 in the Y direction, to a distance of about 1/3 of a length of the printed wiring board 70 in the Y direction.

The third area 703 is a range from a second end 70Yb, which is another end in the Y direction of the printed wiring board 70, to a distance of 1/3 of the length of the printed wiring board 70 in the Y direction.

### (4-1) First area 701

In the first area 701, the carrier filter 53 and the connection reactor 54, which can be said to be heavy objects, are arranged among the components constituting the active filter circuit 60. For convenience of description, these heavy objects are referred to as a "first heavy object 601".

Further, a transformer 81, which can be said to be a heavy object among the components constituting the switching power source 80, is also arranged in the first area 701.

Further, in order to avoid local concentration of barycenters of the first heavy object 601 of the active filter circuit 60 and the transformer 81 of the switching power source 80 also in the first area 701, the heavy object 601 of the active filter circuit 60 is arranged on one end side in the X direction of the first area 701, and the transformer 81 of the switching power source 80 is arranged on another end side in the X direction of the first area 701.

### (4-2) Second area 702

In the second area 702 sandwiched between the first area 701 and the third area 703, the inverter module 30, the active filter module 50, and the power module 120 for fan are arranged along a long side direction (the X direction in FIG. 10) of the printed wiring board 70.

To the inverter module 30, the active filter module 50, and the power module 120 for fan, the common heat sink 200 is attached. Therefore, the heat sink 200 has a shape extending along the X direction in FIG. 10.

### (4-3) Third area 703

In the third area 703, the reactor 24 that can be said to be a heavy object among the components constituting the inverter circuit 40 is arranged. For convenience of description, the heavy object is referred to as a "second heavy object 401".

### (4-4) Distortion/deflection of printed wiring board 70

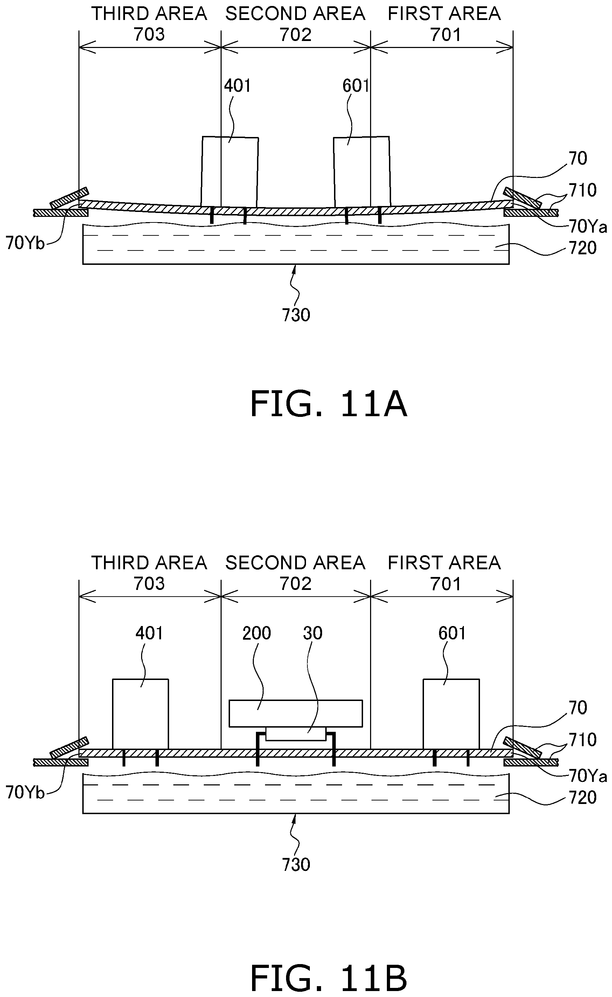

FIG. 11A is a front view of the printed wiring board 70 conveyed on a solder tank 730 and the first heavy object 601 and the second heavy object 401 having barycenters in the second area 702 of the printed wiring board 70 when viewed from a conveyance direction.

Further, FIG. 11B is a front view of the printed wiring board 70 conveyed on the solder tank 730, the first heavy object 601 having a barycenter in the first area 701 of the printed wiring board 70, and the second heavy object 401 having a barycenter in the third area 703, when viewed from a conveyance direction.

In FIGS. 11A and 11B, the solder tank 730 is filled with molten solder 720. At both ends of the opening of the solder tank 730, a conveyor 710 that moves the printed wiring board 70 is installed.

The conveyor 710 sandwiches the first end 70Ya and the second end 70Yb of the printed wiring board 70, and conveys the printed wiring board 70 on a liquid surface of the molten solder 720 at a predetermined speed. The conveyance direction is a long side direction (the X direction in FIG. 10) of the printed wiring board 70.

The liquid surface of the molten solder 720 is wavy due to a jet, and a soldering surface of the printed wiring board 70 is filled with the solder by the momentum.

### (4-4-1) Description of FIG. 11A

As illustrated in FIG. 11A, in a case where a barycenter of the first heavy object 601 and a barycenter of the second heavy object 401 are placed in the second area 702 of the printed wiring board 70, the printed wiring board 70 is deflected in a direction in which the second area 702 approaches the liquid surface of the solder 720.

When the deflection of the printed wiring board 70 increases, not only the printed wiring board 70 cannot smoothly move on the solder tank 730 but also solder is less likely to be attached.

### (4-4-2) Description of FIG. 11B

On the other hand, in the present embodiment, as illustrated in FIG. 11B, a barycenter of the first heavy object 601 is placed in the first area 701 having the first end 70Ya held by the conveyor 710, and a barycenter of the second heavy object 401 is placed in the third area 703 having the second end 70Yb held by the conveyor 710. Therefore, the second area 702 of the printed wiring board 70 is not deflected in a direction approaching the liquid surface of the solder 720.

Therefore, the printed wiring board 70 can smoothly move on the solder tank 730, and it is possible to suppress a state where solder is less likely to be attached.

Further, in a soldering process, a printed wiring board assembly (see FIG. 10) in which electric components are soldered to the printed wiring board 70 is completed. When the operator conveys the printed wiring board assembly to the next process, if the operator conveys the printed wiring board assembly by holding the first area 701 and the third area 703, unnecessary distortion is not generated in the printed wiring board 70.

On the other hand, when only one of the first area 701 or the third area 703 is inadvertently held, for example, when the third area 703 is held such that the printed wiring board 70 is horizontal, a moment due to a weight of the first heavy object 601 and the transformer 81 in the first area 701 acts on the second area 702. This is not a preferable situation for the printed wiring board 70.

However, in the second area 702, the inverter module 30 having a plurality of electrode pins, the active filter module 50, and the power module 120 for fan are arranged side by side in the long side direction (the X direction in FIG. 10), and these electrode pins are soldered to the printed wiring board 70. Therefore, the inverter module 30, the active filter module 50, and the power module 120 for fan serve as reinforcing members for the second area 702.

In addition, since the inverter module 30, the active filter module 50, and the power module 120 for fan are fastened with a screw to one heat sink 200 extending in the long side direction (the X direction in FIG. 10) of the second area 702, the second area 702 is indirectly reinforced.

As a result, even if the operator holds only one of the first area 701 or the third area 703, the second area 702 can withstand distortion and deflection since the second area 702 is reinforced by the inverter module 30, the active filter module 50, the power module 120 for fan, and the heat sink 200.

### (5) Control voltage of active filter module 50

As illustrated in FIG. 1, in the active filter circuit 60, an input of the AC power source 100 is connected to the connection points NU, NV, and NW of the active filter module 50, and the first capacitor 52 is connected between P and N terminals of the active filter module 50.

As a result, the active filter module 50 itself receives an inrush current at a time of recovery from voltage drop or power failure of the power source or an inrush current due to power source frequency fluctuation during operation, so that the active filter module 50 is required to have durability against the inrush current.

Conventionally, the active filter circuit has been optionally mounted on a dedicated board for the active filter circuit. Therefore, in order to cope with models of a plurality of horsepower levels with one type of active filter dedicated board, an active filter module having a large rated current has been mounted in accordance with a model of the highest horsepower. Therefore, the inrush current durability of the active filter module itself has been high, and it has not been necessary to worry about the inrush current durability of the active filter module.

At this time, in order to integrate the inverter circuit 40 and the active filter circuit 60 with one printed wiring board 70 and reduce in size and cost, it is necessary to set the active filter module 50 having an optimum rated current according to horsepower of an application model.

As an effect thereof, in comparison with a conventional product, the inrush current durability of the active filter module 50 itself becomes low, and the active filter module 50 may fail due to the inrush current.

Therefore, an experiment has been conducted to examine the inrush current durability in a case of using the active filter module 50 having an optimum rated current according to the horsepower of the application model.

In the experiment, an ambient temperature of the printed wiring board 70 was set to - 35°C, 25°C, or 70°C, a power source voltage was set to 85% of the rated voltage, 100% of the rated voltage, or 115% of the rated voltage at each ambient temperature, and a power source frequency was switched from 50 Hz to 60 Hz or from 60 Hz to 50 Hz in each power source voltage to examine the inrush current durability.

In any condition, the control voltage of the active filter module 50 was set to 15.0 V, 15.5 V, 16.0 V, and 16.5 V for confirmation.

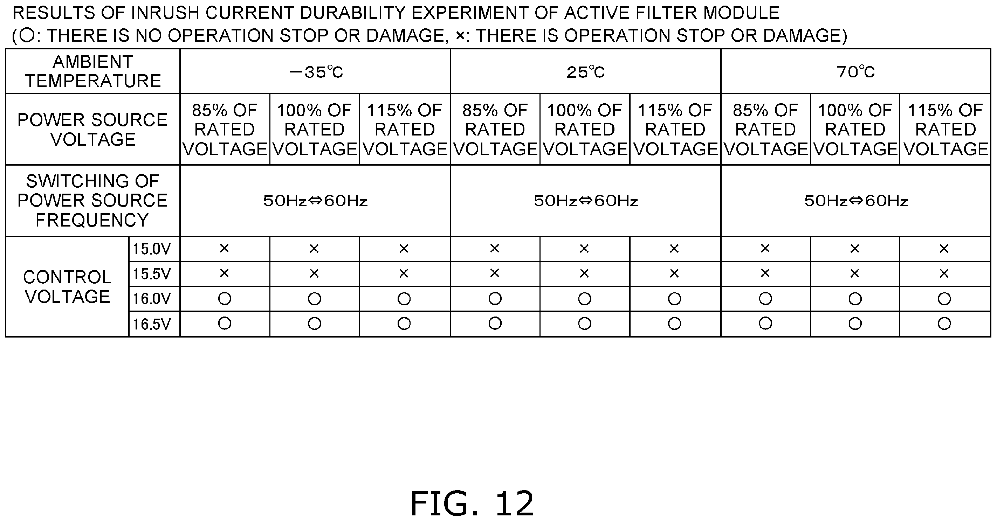

FIG. 12 is a table illustrating results of an inrush current durability experiment of the active filter module 50. In FIG. 12, when the power source frequency was switched from 50 Hz to 60 Hz or from 60 Hz to 50 Hz at 15 V, which was a general control voltage of the active filter module 50, a large inrush current was generated in a compensation current of the active filter module 50 under any condition, and operation of the active filter module 50 was stopped or the active filter module 50 itself was damaged.

Next, when the control voltage of the active filter module 50 was 15.5 V, operation of the active filter module 50 was stopped or the active filter module 50 itself was damaged, similarly to the case of 15 V.

When the control voltage was 16.0 V and 16.5 V, operation of the active filter module 50 was not stopped, and the active filter module 50 itself was not damaged.

In a relationship between the control voltage of the active filter module 50 and current durability, the current durability is about 220% of the rated current when the control voltage is set to general 15 V, and the current durability is 250% or more of the rated current when the control voltage is set to 16 V or more. When the control voltage of the active filter module 50 is increased, the current durability tends to increase.

There is no problem in practical use as long as the durability against the current having the rated current ratio of 250% can be secured. Therefore, in the present embodiment, the control voltage of the active filter module 50 was set to 16.5 V in consideration of a margin.

On the basis of the above experimental results, in the embodiment according to the present disclosure, the control voltage of the active filter module 50 is set not to general 15 V but to 16.5 V higher than that. As a result, the inrush current durability of the active filter module 50 itself is increased, and the active filter module 50 is prevented from being broken due to an inrush current at a time of recovery from voltage drop or power failure of the power source or power source frequency fluctuation during operation.

Here, a disadvantage of intentionally increasing the control voltage of the active filter module 50 is that a short-circuit durability time of the active filter module 50 is shortened.

Therefore, although an upper limit value of the control voltage of the active filter module 50 is 22 V, it is preferable to limit the control voltage to 18 V in consideration of the short-circuit durability time.

However, in the case of the active filter circuit 60, even if the NU, NV, and NW terminals of the active filter module 50 are short-circuited, damage remains only in the active filter circuit 60 because the input of the AC power source 100 is connected to the NU, NV, and NW terminals of the active filter module 50. Therefore, the damage is smaller than that in a situation where the inverter circuit 40 is damaged and the entire motor M needs to be replaced.

Therefore, in a case where the short-circuit tolerance of the active filter module 50 is not important in the active filter circuit 60, the control voltage of the active filter module 50 may be increased to 20 V at the expense of the short short-circuit durability time.

Therefore, the control voltage of the active filter module 50 is preferably 16 V to 20 V.

### (6) Control voltage of inverter module 30

For example, in a case where the motor M is a motor of a variable capacity compressor, as illustrated in FIG. 1, output lines extend individually from the connection points NU, NV, and NW of the inverter module 30 toward the drive coils Lu, Lv, and Lw of the corresponding phases.

Therefore, when the inverter module 30 is short-circuited, not only the inverter circuit 40 but also the compressor is damaged. Therefore, the inverter module 30 needs to have durability against short-circuit in order to prevent breakage of the compressor even when the inverter module 30 is short-circuited.

Therefore, in the power conversion device 10 of the present disclosure, the control voltage of the inverter module 30 is preferably set to 14.5 V so that the short-circuit durability time becomes longer than that of the active filter module 50.

Further, since the inverter circuit 40 is connected to a downstream side of the rectifier circuit 20 when viewed from the AC power source side, the inverter module 30 does not directly receive an input current at a time of recovery from voltage drop or power failure of the power source and an inrush current due to power source frequency fluctuation during operation. Therefore, the inverter module 30 is not required to have inrush current durability as high as that of the active filter module 50. Therefore, a lower limit value of the control voltage of the inverter module 30 may be, for example, 13 V.

### (7) Features

(7-1)
   In the power conversion device 10, the active filter circuit 60 and the inverter circuit 40 are mounted on one printed wiring board 70, so that the power conversion device 10 can be reduced in size, weight, and cost.
(7-2)
   In the power conversion device 10, the printed wiring board 70 is a multilayer printed wiring board having a plurality of conductive pattern layers laminated with an insulator layer interposed in between. Since the low-voltage pattern for detecting a current or a voltage of the active filter circuit 60 and the high-voltage pattern of the inverter circuit 40 do not overlap with each other as viewed in the laminating direction, noise is not superimposed on the low-voltage pattern of the active filter circuit 60 even when the inverter circuit 40 operates. Therefore, the current or the voltage of the active filter circuit 60 is accurately detected.
(7-3)
   In the power conversion device 10, even if noise is superimposed on a low-voltage pattern irrelevant to detection of the current or the voltage of the active filter circuit 60, detection accuracy of the current or the voltage is not affected. Therefore, a part of the low-voltage pattern is allowed to overlap with the high-voltage pattern as viewed in the laminating direction. This results in increasing a degree of freedom in designing the printed wiring board 70.
(7-4)
   Since the low-voltage pattern for detecting a current or a voltage of the inverter circuit 40 and the high-voltage pattern of the active filter circuit 60 do not overlap with each other as viewed in the laminating direction, noise is not superimposed on the low-voltage pattern of the inverter circuit 40 even when the active filter circuit 60 operates. Therefore, the current or the voltage of the inverter circuit 40 is accurately detected.
(7-5)
   In the power conversion device 10, even if noise is superimposed on a low-voltage pattern irrelevant to detection of the current or the voltage of the inverter circuit 40, detection accuracy of the current or the voltage is not affected. Therefore, a part of the low-voltage pattern is allowed to overlap with the high-voltage pattern as viewed in the laminating direction. This results in increasing a degree of freedom in designing the printed wiring board 70.
(7-6)
   In the power conversion device 10, one switching power source circuit 80 that supplies power to the active filter circuit 60 and the inverter circuit 40 is mounted on the printed wiring board 70. Since each of the active filter circuit 60 and the inverter circuit 40 does not need to individually include a switching power source circuit, the power conversion device 10 can be reduced in size, weight, and cost.
(7-7)
   In the power conversion device 10, a mounting area of each of the switching power source circuit 80, the active filter circuit 60, and the inverter circuit 40 on the mounting surface of the printed wiring board 70 is separated. Further, a circuit area of each of the switching power source circuit 80, the active filter circuit 60, and the inverter circuit 40 in the printed wiring board 70 is also separated in the laminating direction of the printed wiring board 70. As a result, the low-voltage pattern for detecting a current or a voltage does not overlap with the high-voltage pattern belonging to a circuit different from a circuit to which the low-voltage pattern belongs, as viewed in the laminating direction.
(7-8)
   In the power conversion device 10, the current-limiting circuit 90 that limits a current flowing through the smoothing capacitor 22 is also used as a current-limiting circuit that limits a current flowing through the first capacitor 52 of the active filter circuit 60. Therefore, the active filter circuit 60 does not need to individually include a current-limiting circuit, and the power conversion device 10 can be reduced in size, weight, and cost.
(7-9)
   In the power conversion device 10, the heat sink 200 that cools the inverter module 30 of the inverter circuit 40 is also used as a heat sink that cools the active filter module 50. Therefore, since the inverter module 30 and the active filter module 50 can be cooled by one heat sink 200, the power conversion device 10 can be reduced in size, weight, and cost.
(7-10)
   In the power conversion device 10, when the rectangular printed wiring board 70 is sectioned into the first area 701, the second area 702, and the third area 703 sequentially aligned in the short side direction, the first heavy object 601 is arranged in the first area 701, and the second heavy object 401 is arranged in the third area 703. The first heavy object 601 and the second heavy object 401, which are heavy electric components, are prevented from being biased to one area, and distortion and deflection of the printed wiring board 70 due to weights of the first heavy object 601 and the second heavy object 401 are less likely to occur.
(7-11)
   In the power conversion device 10, the second area 702 is reinforced by mounting the inverter module 30, the active filter module 50, and the power module 120 for fan in the second area 702. This results in eliminating necessity of newly adding a reinforcing member.
(7-12)
   In the power conversion device 10, the second area 702 is further reinforced by fastening one heat sink 200 common to the inverter module 30, the active filter module 50, and the power module 120 for fan with a screw.
(7-13)
   In the power conversion device 10, in the printed wiring board 70, the inverter module 30, the active filter module 50, and the power module 120 for fan are arranged along a long side direction, in which the printed wiring board 70 is conveyed on the solder tank 730 in parallel with the long side direction of the printed wiring board, and the heat sink 200 extends along the arrangement direction. Therefore, strength in the long side direction of the second area 702 is enhanced, which increases strength in the long side direction of the printed wiring board 70 itself.
(7-14)
   In the power conversion device 10, the first heavy object 601 includes the reactor of the carrier filter 53 and the connection reactor 54, and the second heavy object 401 includes the reactor 24. Since these reactors are heavier than the inverter module 30, the active filter module 50, and the power module 120 for fan, these reactors are mounted on the first area 701 having the first end 70Ya and the third area 703 having the second end 70Yb in the printed wiring board 70. The operator naturally holds both ends of the printed wiring board 70 when carrying the printed wiring board 70. As a result, the first heavy object 601 side and the second heavy object 401 side are held, so that distortion and deflection of the printed wiring board 70 are suppressed.
(7-15)
   In the power conversion device 10, the individual components of the first heavy object 601 are arranged along the long side direction of the first area 701 having the first end 70Ya of the printed wiring board 70, and the individual components of the second heavy object 401 are arranged along the long side direction of the third area 703 having the second end 70Yb. The operator naturally holds both ends of the printed wiring board 70 when carrying the printed wiring board 70. As a result, the first heavy object 601 side and the second heavy object 401 side are held, so that distortion and deflection of the printed wiring board 70 are suppressed.
(7-16)
   In the power conversion device 10, no heavy object is mounted in the second area 702 sandwiched between the first area 701 and the third area 703. When the operator carries the printed wiring board 70 by holding the first area 701 and the third area 703, the second area 702 is prevented from being distorted or deflected by a weight of the mounted component.
(7-17)
   In the power conversion device 10, the printed wiring board 70 passes through the solder tank 730 along the long side direction of the printed wiring board 70 in a state where the first heavy object 601 is placed in the first area 701 having the first end 70Ya and the second heavy object 401 is placed in the third area 703 having the second end 70Yb. The conveyor 710 of the solder tank 730 holds the first end 70Ya and the second end 70Yb of the printed wiring board 70 and conveys the printed wiring board 70. Since there is no heavy object in the second area 702 that is a central portion of the printed wiring board 70, the printed wiring board 70 is not deflected concavely, and soldering failure due to distortion and deflection is suppressed.
(7-18)
   In the power conversion device 10, the first heat transfer member 220 is arranged between the active filter module 50 and the heat sink 200. In this case, an impedance between the active filter module 50 and the heat sink 200 increases, and a parasitic capacitance between the active filter module 50 and the heat sink 200 decreases. As a result, a ground impedance of the heat sink 200 increases, a noise component passes through the existing carrier filter 53, a noise component is reduced, and deterioration of EMI (a noise terminal voltage) during operation of the active filter circuit 60 is suppressed.
(7-19)
   In the power conversion device 10, the active filter circuit 60 and the inverter circuit 40 are mounted on the same printed wiring board, and component saving and cost reduction are achieved by integrating into one board.
(7-20)
   In the power conversion device 10, a thickness of the first heat transfer member 220 is determined based on a physical quantity such as a potential difference between the terminal of the active filter module 50 and the heat sink 200, so that the thickness of the first heat transfer member 220 is appropriately set without excess or deficiency.
(7-21)
   In the power conversion device 10, since the ground impedance can be adjusted by the surface treatment on the first heat transfer member 220, it is possible to adjust the ground impedance while maintaining a heat transfer property of the first heat transfer member 220 without requiring other members.
(7-22)
   In the power conversion device 10, since the active filter module 50 is smaller in package than the inverter module 30, a distance between a terminal of the active filter module 50 and the heat absorbing portion 203 becomes short when the active filter module 50 is attached to the heat absorbing portion 203 of the heat sink 200, which is more disadvantageous than the inverter module 30 in terms of a creepage distance and a spatial distance. Therefore, the first heat transfer member 220 that increases an impedance between the active filter module 50 and the heat sink 200 is interposed to overcome the disadvantage.
(7-23)
   In the active filter circuit 60, by setting the control voltage of the active filter module 50 to 16.0 V or more, which is higher than general 15 V, the inrush current durability of the switching element is enhanced, which can increase the breakdown durability of the switching element.
(7-24)
   In the embodiment according to the present disclosure, the control voltage of the active filter module 50 is set to 16.5 V.
(7-25)
   Since the inverter module 30 itself does not directly receive an inrush current, the inrush current durability is smaller than the inrush current durability required for the active filter module 50. Therefore, the control voltage of the inverter module 30 can be made smaller than the control voltage of the active filter module 50.
(7-26)
   In the embodiment according to the present disclosure, the control voltage of the inverter module 30 is 15.5 V or less and the lower limit value is 13 V.

### (8) Others

A second heat transfer member 250 may be interposed between the inverter module 30 and the heat sink 200. In this case, an effect of increasing an impedance between the inverter module 30 and the heat sink 200 by the second heat transfer member 250 may be smaller than an effect of increasing an impedance between the active filter module 50 and the heat sink 200 by the first heat transfer member 220.

This is because a noise component of the inverter circuit 40 can be reduced by an existing noise filter circuit. Therefore, since the existing noise filter circuit does not need to be strong, the size does not increase. For example, heat transfer grease is adopted as the second heat transfer member 250.

### REFERENCE SIGNS LIST

10: power conversion device
20: rectifier circuit
22: smoothing capacitor
24: reactor (second heavy object)
30: inverter module (second power module)
40: inverter circuit
50: active filter module (first power module)
52: first capacitor
53: carrier filter (first heavy object)
54: connection reactor (first heavy object)
60: active filter circuit
70: printed wiring board
70Ya: first end
70Yb: second end
80: switching power source (switching power source circuit)
90: current-limiting circuit
100: AC power source
200: heat sink (cooler)
201: cooling portion
203: heat absorbing portion
203a: heat absorbing surface
220: first heat transfer member
250: second heat transfer member
701: first area
702: second area
703: third area
730: solder tank (solder flow tank)

### CITATION LIST

### PATENT LITERATURE

Patent Literature 1: WO 2017-115431

## Claims

1. A power conversion device (10) comprising:
an active filter circuit (60) connected in parallel between an alternating-current (AC) power source (100) and a rectifier circuit (20) that rectifies AC power of the AC power source (100) into direct-current (DC) power, the active filter circuit (60) being configured to generate a compensation current for suppressing a harmonic current;
an inverter circuit (40) configured to convert DC power outputted from the rectifier circuit (20) into AC power having a predetermined frequency; and
one printed wiring board (70) on which the active filter circuit (60) and the inverter circuit (40) are mounted;
**characterized by**
a capacitor (22) configured to smooth output power of the rectifier circuit (20); and
a current-limiting circuit (90) configured to limit a current flowing through the capacitor (22),
wherein
the active filter circuit (60) includes:
a first switching circuit (45) configured to generate a compensation current for suppressing a harmonic current; and
a first capacitor (52) configured to smooth output power of the first switching circuit (45);
the current-limiting circuit (90) is also used as a current-limiting circuit that limits a current flowing through the first capacitor (52) of the active filter circuit (60);
the printed wiring board (70) is a multilayer printed wiring board including a plurality of conductive pattern layers laminated with an insulator layer interposed in between, the printed wiring board (70) including a first layer (Z1) and a second layer (Z2), wherein
in the first layer (Z1), a first-B low-voltage pattern (61L) for detecting a current or a voltage of the active filter circuit (60) is formed, and
in the second layer (Z2), a second high-voltage pattern (52H) of the inverter circuit (40) is formed; and
the first-B low-voltage pattern (61L) does not overlap with the second high-voltage pattern (52H) as viewed in a laminating direction.

2. The power conversion device (10) according to claim 1, wherein
the printed wiring board (70) further includes a third layer (Z3) and a fourth layer (Z4) such that, when a surface on which various electrical components constituting the inverter circuit (40) and the active filter circuit (60) are mounted faces upward, conductive pattern layers of the first layer, the second layer, the third layer and the fourth layer are laminated from upward to downward,
in the fourth layer (Z4), a fourth-B low-voltage pattern (64L1) and a fourth-C low-voltage pattern (64L2) belonging to the active filter circuit (60) are formed, and
a part of the fourth-B low-voltage pattern (64L1) and a part of the fourth-C low-voltage pattern (64L2) overlap with a first high-voltage pattern (61H) as viewed in a laminating direction, and
a part of the first high-voltage pattern (61H) exists in a region of the first layer (Z1) overlapping with a region where a part of the fourth-C low-voltage pattern (64L2) exists as viewed in the laminating direction.

3. The power conversion device (10) according to claim 1, wherein
the printed wiring board (70) is a multilayer printed wiring board including a plurality of conductive pattern layers laminated with an insulator layer interposed in between, wherein:
in the first layer (Z1), a first-A low-voltage pattern (41L) for detecting a current or a voltage of the inverter circuit (40) is further formed; and
the first-A low-voltage pattern (41L) does not overlap with the high-voltage pattern (52H) as viewed in a laminating direction.

4. The power conversion device (10) according to claim 3, wherein
the printed wiring board (70) further includes a third layer (Z3) and a fourth layer (Z4) such that, when a surface on which various electrical components constituting the inverter circuit (40) and the active filter circuit (60) are mounted faces upward, conductive pattern layers of the first layer, the second layer, the third layer and the fourth layer are laminated from upward to downward,
in the second layer (Z2), a second low-voltage pattern (42L) is formed,
a part of the second low-voltage pattern (42L) overlaps with a third-A high-voltage pattern (43H) as viewed in a laminating direction, and
the third-A high-voltage pattern (43H) is not the inverter circuit (40) and the active filter circuit (60), and is formed in a region of the third layer (Z3) overlapping with a region where the second low-voltage pattern (42L) exists as viewed in the laminating direction.

5. The power conversion device (10) according to any one of claims 1 to 4, further comprising:
one switching power source circuit (80) mounted on the printed wiring board (70), wherein
the active filter circuit (60) and the inverter circuit (40) receive power supply from the switching power source circuit (80).

6. The power conversion device (10) according to claim 5, wherein
mounting areas of the switching power source circuit (80), the active filter circuit (60), and the inverter circuit (40) in the printed wiring board (70) are separated, and
circuit areas of the switching power source circuit (80), the active filter circuit (60), and the inverter circuit (40) in the printed wiring board (70) are also separated.

7. The power conversion device (10) according to claim 1, wherein
the active filter circuit (60) further includes a first power module (50) that incorporates the first switching circuit (45) in one package,
the inverter circuit (40) includes:
a second power module (30) that incorporates, in one package, a second switching circuit (25) configured to convert DC power into AC power of a predetermined frequency; and
a cooler configured to cool the second power module (30), and
the cooler is also used as a cooler that cools the first power module (50).

8. The power conversion device (10) according to any one of claims 1 to 6, wherein
the active filter circuit (60) includes a first heavy object (53, 54) that is an electric component,
the inverter circuit (40) includes a second heavy object (24) that is an electric component, and
when the printed wiring board (70) is sectioned into a first area (701), a second area (702), and a third area (703) sequentially aligned in a predetermined first direction, the first heavy object (53, 54) is arranged in the first area (701), and the second heavy object (24) is arranged in the third area (703).

9. The power conversion device (10) according to claim 8, wherein
the active filter circuit (60) includes a first power module (50) configured to generate a compensation current for suppressing a harmonic current,
the inverter circuit (40) includes a second power module (30) configured to convert DC power into AC power having a predetermined frequency, and
at least one of the first power module (50) or the second power module (30) is arranged in the second area (702).

10. The power conversion device (10) according to claim 9, wherein
the first power module (50) and the second power module (30) are both arranged in the second area (702).

11. The power conversion device (10) according to claim 9 or 10, further comprising:
a cooler (200) that is attached to the first power module (50) and the second power module (30), and is configured to cool the first power module (50) and the second power module (30).

12. The power conversion device (10) according to claim 11, wherein
the first power module (50) and the second power module (30) are arranged along a second direction orthogonal to the first direction, and
the cooler (200) has a shape extending along the second direction.

13. The power conversion device (10) according to any one of claims 8 to 12, wherein
at least one of the first heavy object (53, 54) or the second heavy object (24) is a reactor.

14. The power conversion device (10) according to any one of claims 8 to 13, wherein
when at least one of the first heavy object (53, 54) or the second heavy object (24) includes a plurality of components, the plurality of components are arranged in a second direction orthogonal to the first direction.

15. The power conversion device (10) according to any one of claims 8 to 14, wherein
the first area (701) is in a distance within 1/3 of a length of the printed wiring board (70) in the first direction from a first end (70Ya) that is one end of the printed wiring board (70) in the first direction, and
the third area (703) is in a distance within 1/3 of a length of the printed wiring board (70) in the first direction from a second end (70Yb) that is another end of the printed wiring board (70) in the first direction.

16. The power conversion device (10) according to any one of claims 8 to 15, wherein
mounting of the first heavy object (53, 54) and the second heavy object (24) on the printed wiring board (70) is realized when the printed wiring board (70) on which the first heavy object (53, 54) and the second heavy object (24) are placed passes through a solder flow tank (730) along a second direction orthogonal to the first direction.

17. The power conversion device (10) according to any one of claims 1 to 6, wherein
the active filter circuit (60) includes a first power module (50) configured to generate a compensation current for suppressing a harmonic current,
the inverter circuit (40) includes a second power module (30) configured to convert DC power into AC power having a predetermined frequency, and
the power conversion device further includes:
a cooler (200) that is attached to the first power module (50) and the second power module (30), and is configured to cool the first power module (50) and the second power module (30); and
a first heat transfer member (220) that is arranged between the first power module (50) and the cooler (200), and is configured to increase an impedance between the first power module (50) and the cooler (200).

18. The power conversion device (10) according to claim 17, wherein
a thickness of the first heat transfer member (220) is determined based on a potential difference between a terminal of the first power module (50) and the cooler (200).

19. The power conversion device (10) according to claim 17 or 18, wherein
a ground impedance of the first heat transfer member (220) is adjusted by surface treatment on the first heat transfer member (220).

20. The power conversion device (10) according to any one of claims 17 to 19, wherein
the cooler (200) includes:
a cooling portion (201); and
a heat absorbing portion (203) configured to transfer heat from the first power module (50) and the second power module (30) to the cooling portion (201),
the heat absorbing portion (203) includes a heat absorbing surface (203a) surrounded by a long side parallel to a longitudinal direction of the cooling portion (201) and a short side orthogonal to the longitudinal direction, and the first power module (50) and the second power module (30) are attached to the heat absorbing surface (203a),
the first power module (50) and the second power module (30) are both rectangular parallelepipeds, and
a length of a short side of the first power module (50) is equal to or more than a short side of the heat absorbing surface (203a) and equal to or less than a short side of the second power module (30).

21. The power conversion device (10) according to any one of claims 17 to 20, further comprising:
a second heat transfer member (250) arranged between the second power module (30) and the cooler (200), wherein
an effect of increasing an impedance between the second power module (30) and the cooler (200) by the second heat transfer member (250) is smaller than an effect of increasing an impedance between the first power module (50) and the cooler (200) by the first heat transfer member (220).

22. The power conversion device (10) according to any one of claims 1 to 6, wherein
the active filter circuit (60) includes: a first power module (50) that incorporates, in one package, a plurality of switching elements configured to generate a compensation current for suppressing a harmonic current and a control circuit configured to control the switching elements, and
a control voltage of the first power module (50) is 16.0 V or more.

23. The power conversion device (10) according to claim 22, wherein
a control voltage of the first power module (50) is 16.5 V.

24. The power conversion device (10) according to claim 22 or 23, wherein
the inverter circuit (40) includes: a second power module (30) that incorporates, in one package, a plurality of switching elements (25) configured to convert the DC power into AC power of a predetermined frequency and a control circuit (26) configured to control the switching elements, and
a control voltage of the second power module (30) is smaller than a control voltage of the first power module (50).

25. The power conversion device (10) according to claim 24, wherein
a control voltage of the second power module (30) is 15.5 V or less.

## Patentansprüche

1. Leistungsumwandlungsvorrichtung (10), die aufweist:
eine aktive Filterschaltung (60), die parallel zwischen eine Wechselstromquelle (100) und eine Gleichrichterschaltung (20) geschaltet ist, die den Wechselstrom der Wechselstromquelle (100) in Gleichstrom gleichrichtet, wobei die aktive Filterschaltung (60) konfiguriert ist, einen Kompensationsstrom zur Unterdrückung eines Oberschwingungsstroms zu erzeugen;
eine Wechselrichterschaltung (40), die konfiguriert ist, den von der Gleichrichterschaltung (20) abgegebenen Gleichstrom in Wechselstrom mit einer vorbestimmten Frequenz umzuwandeln; und
eine Leiterplatte (70), auf der die aktive Filterschaltung (60) und die Wechselrichterschaltung (40) angebracht sind;
**gekennzeichnet durch**
einem Kondensator (22), der konfiguriert ist, die Ausgangsleistung der Gleichrichterschaltung (20) zu glätten; und
eine Strombegrenzungsschaltung (90), die konfiguriert ist, einen durch den Kondensator (22) fließenden Strom zu begrenzen,
wobei
die aktive Filterschaltung (60) umfasst:
einen ersten Schaltkreis (45), der konfiguriert ist, einen Kompensationsstrom zum Unterdrücken eines Oberschwingungsstroms zu erzeugen; und
einen ersten Kondensator (52), der konfiguriert ist, die Ausgangsleistung der ersten Schaltkreise (45) zu glätten;
die Strombegrenzungsschaltung (90) auch als Strombegrenzungsschaltung verwendet wird, die einen durch den ersten Kondensator (52) der aktiven Filterschaltung (60) fließenden Strom begrenzt;
die Leiterplatte (70) eine mehrschichtige Leiterplatte ist, die mehrere leitfähige Musterschichten aufweist, die mit einer dazwischen angeordneten Isolierschicht laminiert sind, wobei die Leiterplatte (70) eine erste Schicht (Z1) und eine zweite Schicht (Z2) umfasst, wobei
in der ersten Schicht (Z1) ein erstes B-Niederspannungsmuster (61L) zum Erfassen eines Stroms oder einer Spannung der aktiven Filterschaltung (60) ausgebildet ist, und
in der zweiten Schicht (Z2) ein zweites Hochspannungsmuster (52H) der Wechselrichterschaltung (40) ausgebildet ist; und
das erste B-Niederspannungsmuster (61L) sich in Laminierungsrichtung gesehen nicht mit dem zweiten Hochspannungsmuster (52H) überlappt.

2. Leistungsumwandlungsvorrichtung (10) nach Anspruch 1, wobei
die gedruckte Leiterplatte (70) ferner eine dritte Schicht (Z3) und eine vierte Schicht (Z4) aufweist, so dass, wenn eine Oberfläche, auf der verschiedene elektrische Komponenten, die die Wechselrichterschaltung (40) und die aktive Filterschaltung (60) bilden, nach oben zeigen, die leitfähigen Musterschichten der ersten Schicht, der zweiten Schicht, der dritten Schicht und der vierten Schicht von oben nach unten laminiert sind,
in der vierten Schicht (Z4) ein viertes B-Niederspannungsmuster (64L1) und ein viertes C-Niederspannungsmuster (64L2), die zur aktiven Filterschaltung (60) gehören, ausgebildet sind, und
ein Teil des vierten B-Niederspannungsmusters (64L1) und ein Teil des vierten C-Niederspannungsmusters (64L2) sich mit einem ersten Hochspannungsmuster (61H) in Laminierungsrichtung gesehen überlappen, und
ein Teil des ersten Hochspannungsmusters (61H) in einem Bereich der ersten Schicht (Z1) vorhanden ist, der sich mit einem Bereich überlappt, in dem ein Teil des vierten C-Niederspannungsmusters (64L2) in Laminierungsrichtung gesehen vorhanden ist.

3. Leistungsumwandlungsvorrichtung (10) nach Anspruch 1, wobei
die gedruckte Leiterplatte (70) eine mehrschichtige gedruckte Leiterplatte ist, die mehrere leitfähige Musterschichten aufweist, die mit einer dazwischen angeordneten Isolierschicht laminiert sind, wobei
in der ersten Schicht (Z1) ein erstes A-Niederspannungsmuster (41L) zum Erfassen eines Stroms oder einer Spannung der Wechselrichterschaltung (40) weiter ausgebildet ist; und
das erste A-Niederspannungsmuster (41L) sich in Laminierungsrichtung gesehen nicht mit dem Hochspannungsmuster (52H) überlappt.

4. Leistungsumwandlungsvorrichtung (10) nach Anspruch 3, wobei
die Leiterplatte (70) ferner eine dritte Schicht (Z3) und eine vierte Schicht (Z4) aufweist, so dass, wenn eine Oberfläche, auf der verschiedene elektrische Komponenten, die die Wechselrichterschaltung (40) und die aktive Filterschaltung (60) bilden, nach oben zeigen, die leitfähigen Musterschichten der ersten Schicht, der zweiten Schicht, der dritten Schicht und der vierten Schicht von oben nach unten laminiert sind,
in der zweiten Schicht (Z2) ein zweites Niederspannungsmuster (42L) ausgebildet ist,
ein Teil des zweiten Niederspannungsmusters (42L) sich in Laminierungsrichtung gesehen mit einem dritten A-Hochspannungsmuster (43H) überlappt, und
das dritte A-Hochspannungsmuster (43H) nicht die Wechselrichterschaltung (40) und die aktive Filterschaltung (60) ist und in einem Bereich der dritten Schicht (Z3) ausgebildet ist, der sich mit einem Bereich überlappt, in dem das zweite Niederspannungsmuster (42L) in Laminierungsrichtung gesehen vorhanden ist.

5. Leistungsumwandlungsvorrichtung (10) nach einem der Ansprüche 1 bis 4, die ferner das aufweist:
eine auf der Leiterplatte (70) montierte Schaltstromquellenschaltung (80), wobei die aktive Filterschaltung (60) und die Wechselrichterschaltung (40) von der Schaltstromquellenschaltung (80) eine Stromversorgung erhalten.

6. Leistungsumwandlungsvorrichtung (10) nach Anspruch 5, wobei
die Montagebereiche der Schaltstromquellenschaltung (80), der aktiven Filterschaltung (60) und der Wechselrichterschaltung (40) in der Leiterplatte (70) voneinander getrennt sind und
die Schaltungsbereiche der Schaltstromquellenschaltung (80), der aktiven Filterschaltung (60) und der Wechselrichterschaltung (40) in der Leiterplatte (70) ebenfalls voneinander getrennt sind.

7. Leistungsumwandlungsvorrichtung (10) nach Anspruch 1, wobei
die aktive Filterschaltung (60) ferner ein erstes Leistungsmodul (50) aufweist, das den ersten Schaltkreis (45) in einem Gehäuse enthält,
die Wechselrichterschaltung (40) aufweist:
ein zweites Leistungsmodul (30), das in einem Gehäuse einen zweiten Schaltkreis (25), der konfiguriert ist, Gleichstrom in Wechselstrom mit einer vorbestimmten Frequenz umzuwandeln; und einen Kühler enthält, der konfiguriert ist, das zweite Leistungsmodul (30) zu kühlen, und
der Kühler auch als Kühler verwendet wird, der das erste Leistungsmodul (50) kühlt.

8. Leistungsumwandlungsvorrichtung (10) nach einem der Ansprüche 1 bis 6, wobei
die aktive Filterschaltung (60) ein erstes schweres Objekt (53, 54) aufweist, das eine elektrische Komponente ist,
die Wechselrichterschaltung (40) ein zweites schweres Objekt (24) aufweist, das eine elektrische Komponente ist, und
wenn die Leiterplatte (70) in einen ersten Bereich (701), einen zweiten Bereich (702) und einen dritten Bereich (703) unterteilt ist, die nacheinander in einer vorbestimmten ersten Richtung ausgerichtet sind, das erste schwere Objekt (53, 54) im ersten Bereich (701) angeordnet ist und das zweite schwere Objekt (24) im dritten Bereich (703) angeordnet ist.

9. Leistungsumwandlungsvorrichtung (10) nach Anspruch 8, wobei
die aktive Filterschaltung (60) ein erstes Leistungsmodul (50) aufweist, das konfiguriert ist, einen Kompensationsstrom zum Unterdrücken eines Oberschwingungsstroms zu erzeugen,
die Wechselrichterschaltung (40) ein zweites Leistungsmodul (30) aufweist, das konfiguriert ist, Gleichstrom in Wechselstrom mit einer vorbestimmten Frequenz umzuwandeln, und
mindestens eines des ersten Leistungsmoduls (50) oder des zweiten Leistungsmoduls (30) in dem zweiten Bereich (702) angeordnet ist.

10. Leistungsumwandlungsvorrichtung (10) nach Anspruch 9, wobei
das erste Leistungsmodul (50) und das zweite Leistungsmodul (30) beide in dem zweiten Bereich (702) angeordnet sind.

11. Leistungsumwandlungsvorrichtung (10) nach Anspruch 9 oder 10, die ferner aufweist:
einen Kühler (200), der an dem ersten Leistungsmodul (50) und dem zweiten Leistungsmodul (30) angebracht ist und konfiguriert ist, das erste Leistungsmodul (50) und das zweite Leistungsmodul (30) zu kühlen.

12. Leistungsumwandlungsvorrichtung (10) nach Anspruch 11, wobei
das erste Leistungsmodul (50) und das zweite Leistungsmodul (30) entlang einer zweiten Richtung orthogonal zur ersten Richtung angeordnet sind, und der Kühler (200) eine Form aufweist, die sich entlang der zweiten Richtung erstreckt.

13. Leistungsumwandlungsvorrichtung (10) nach einem der Ansprüche 8 bis 12, wobei
mindestens eines des ersten schweren Objekts (53, 54) oder des zweiten schweren Objekts (24) eine Drossel ist.

14. Leistungsumwandlungsvorrichtung (10) nach einem der Ansprüche 8 bis 13, wobei
wenn mindestens eines des ersten schweren Objekts (53, 54) oder des zweiten schweren Objekts (24) mehrere Komponenten aufweist, wobei die mehreren Komponenten in einer zweiten Richtung orthogonal zur ersten Richtung angeordnet sind.

15. Leistungsumwandlungsvorrichtung (10) nach einem der Ansprüche 8 bis 14, wobei
der erste Bereich (701) sich in einem Abstand innerhalb von 1/3 einer Länge der Leiterplatte (70) in der ersten Richtung von einem ersten Ende (70Ya) befindet, das ein Ende der Leiterplatte (70) in der ersten Richtung ist, und der dritte Bereich (703) in einem Abstand innerhalb von 1/3 einer Länge der Leiterplatte (70) in der ersten Richtung von einem zweiten Ende (70Yb) angeordnet ist, das ein anderes Ende der Leiterplatte (70) in der ersten Richtung ist.

16. Leistungsumwandlungsvorrichtung (10) nach einem der Ansprüche 8 bis 15, wobei
die Befestigung des ersten schweren Objekts (53, 54) und des zweiten schweren Objekts (24) auf der Leiterplatte (70) durchgeführt wird, wenn die Leiterplatte (70), auf der das erste schwere Objekt (53, 54) und das zweite schwere Objekt (24) platziert sind, durch einen Lötflusstank (730) entlang einer zweiten Richtung orthogonal zur ersten Richtung läuft.

17. Leistungsumwandlungsvorrichtung (10) nach einem der Ansprüche 1 bis 6, wobei
die aktive Filterschaltung (60) ein erstes Leistungsmodul (50) aufweist, das konfiguriert ist, einen Kompensationsstrom zum Unterdrücken eines Oberschwingungsstroms zu erzeugen,
die Wechselrichterschaltung (40) ein zweites Leistungsmodul (30) aufweist, das konfiguriert ist, Gleichstrom in Wechselstrom mit einer vorbestimmten Frequenz umzuwandeln, und
die Leistungsumwandlungsvorrichtung ferner umfasst:
einen Kühler (200), der an dem ersten Leistungsmodul (50) und dem zweiten Leistungsmodul (30) angebracht ist und konfiguriert ist, das erste Leistungsmodul (50) und das zweite Leistungsmodul (30) zu kühlen; und
ein erstes Wärmeübertragungselement (220), das zwischen dem ersten Leistungsmodul (50) und dem Kühler (200) angeordnet ist und konfiguriert ist, eine Impedanz zwischen dem ersten Leistungsmodul (50) und dem Kühler (200) zu erhöhen.

18. Leistungsumwandlungsvorrichtung (10) nach Anspruch 17, wobei
die Dicke des ersten Wärmeübertragungselements (220) basierend auf einer Potentialdifferenz zwischen einem Anschluss des ersten Leistungsmoduls (50) und dem Kühler (200) bestimmt wird.

19. Leistungsumwandlungsvorrichtung (10) nach Anspruch 17 oder 18, wobei
eine Erdungsimpedanz des ersten Wärmeübertragungselements (220) durch eine Oberflächenbehandlung des ersten Wärmeübertragungselements (220) eingestellt wird.

20. Leistungsumwandlungsvorrichtung (10) nach einem der Ansprüche 17 bis 19, wobei
der Kühler (200) aufweist:
einen Kühlabschnitt (201) und
einen Wärmeabsorptionsabschnitt (203), der konfiguriert ist, Wärme vom ersten Leistungsmodul (50) und vom zweiten Leistungsmodul (30) an den Kühlabschnitt (201) zu übertragen,
der Wärmeabsorptionsabschnitt (203) eine Wärmeabsorptionsfläche (203a) aufweist, die von einer langen Seite parallel zur Längsrichtung des Kühlabschnitts (201) und einer kurzen Seite orthogonal zur Längsrichtung umgeben ist, und das erste Leistungsmodul (50) und das zweite Leistungsmodul (30) an der Wärmeabsorptionsfläche (203a) angebracht sind, das erste Leistungsmodul (50) und das zweite Leistungsmodul (30) beide rechteckige Parallelepipede sind, und
die Länge einer kurzen Seite des ersten Leistungsmoduls (50) gleich oder größer als eine kurze Seite der Wärmeabsorptionsfläche (203a) und gleich oder kleiner als eine kurze Seite des zweiten Leistungsmoduls (30) ist.

21. Leistungsumwandlungsvorrichtung (10) nach einem der Ansprüche 17 bis 20, die ferner aufweist:
ein zweites Wärmeübertragungselement (250), das zwischen dem zweiten Leistungsmodul (30) und dem Kühler (200) angeordnet ist, wobei
der Effekt der Erhöhung der Impedanz zwischen dem zweiten Leistungsmodul (30) und dem Kühler (200) durch das zweite Wärmeübertragungselement (250) geringer ist als der Effekt der Erhöhung der Impedanz zwischen dem ersten Leistungsmodul (50) und dem Kühler (200) durch das erste Wärmeübertragungselement (220).

22. Leistungsumwandlungsvorrichtung (10) nach einem der Ansprüche 1 bis 6, wobei
die aktive Filterschaltung (60) umfasst: ein erstes Leistungsmodul (50), das in einem Gehäuse mehrere Schaltelemente, die konfiguriert sind, einen Kompensationsstrom zum Unterdrücken eines Oberschwingungsstroms zu erzeugen, und eine Steuerschaltung enthält, die zum Steuern der Schaltelemente konfiguriert ist, und
eine Steuerspannung des ersten Leistungsmoduls (50) 16,0 V oder mehr beträgt.

23. Leistungsumwandlungsvorrichtung (10) nach Anspruch 22, wobei
eine Steuerspannung des ersten Leistungsmoduls (50) 16,5 V beträgt.

24. Leistungsumwandlungsvorrichtung (10) nach Anspruch 22 oder 23, wobei
die Wechselrichterschaltung (40) umfasst: ein zweites Leistungsmodul (30), das in einem Gehäuse mehrere Schaltelemente (25), die konfiguriert sind, die Gleichstrom in Wechselstrom einer vorbestimmten Frequenz umzuwandeln, und eine Steuerschaltung (26) enthält, die konfiguriert ist, die Schaltelemente steuert,
eine Steuerspannung des zweiten Leistungsmoduls (30) kleiner ist als eine Steuerspannung des ersten Leistungsmoduls (50).

25. Leistungsumwandlungsvorrichtung (10) nach Anspruch 24, wobei
eine Steuerspannung des zweiten Leistungsmoduls (30) 15,5 V oder weniger beträgt.

## Revendications

1. Dispositif de conversion de courant (10), comprenant :
un circuit de filtre actif (60) connecté en parallèle entre une source d'alimentation en courant alternatif (100) et un circuit redresseur (20) redressant en courant continu le courant alternatif de la source d'alimentation en courant alternatif (100), le circuit de filtre actif (60) étant configuré pour générer un courant de compensation afin de supprimer un courant harmonique ;
un circuit onduleur (40) configuré pour convertir le courant continu délivré par le circuit redresseur (20) en courant alternatif ayant une fréquence prédéterminée ; et
une carte de circuit imprimé (70) sur laquelle sont montés le circuit de filtre actif (60) et le circuit onduleur (40) ;
**caractérisé par**
un condensateur (22) configuré pour lisser le courant de sortie du circuit redresseur (20) ; et
un circuit limiteur de courant (90) configuré pour limiter un courant circulant par le condensateur (22),
où
le circuit de filtre actif (60) comprend :
un premier circuit de commutation (45) configuré pour générer un courant de compensation afin de supprimer un courant harmonique ; et
un premier condensateur (52) configuré pour lisser le courant de sortie du premier circuit de commutation (45) ;
où le circuit limiteur de courant (90) est également utilisé comme circuit limiteur de courant limitant un courant circulant par le premier condensateur (52) du circuit de filtre actif (60) ;
la carte de circuit imprimé (70) est une carte de circuit imprimé multicouche comprenant une pluralité de couches de motifs conducteurs stratifiées avec une couche isolante intercalée entre elles, ladite carte de circuit imprimé (70) comprenant une première couche (Z1) et une deuxième couche (Z2), où
un premier motif basse tension de type B (61L) destiné à détecter un courant ou une tension du circuit de filtre actif (60) est formé dans la première couche (Z1), et
un deuxième motif haute tension (52H) du circuit onduleur (40) est formé dans la deuxième couche (Z2) ; et
le premier motif basse tension de type B (61L) ne chevauche pas le deuxième motif haute tension (52H) dans le sens de stratification.

2. Dispositif de conversion de courant (10) selon la revendication 1, où
la carte de circuit imprimé (70) comprend en outre une troisième couche (Z3) et une quatrième couche (Z4) de sorte que, lorsqu'une surface sur laquelle sont montés divers composants électriques constituant le circuit onduleur (40) et le circuit de filtre actif (60) est orientée vers le haut, les couches de motifs conducteurs de la première couche, de la deuxième couche, de la troisième couche et de la quatrième couche sont stratifiées de haut en bas,
un quatrième motif basse tension de type B (64L1) et un quatrième motif basse tension de type C (64L2) appartenant au circuit de filtre actif (60) sont formés dans la quatrième couche (Z4), et
une partie du quatrième motif basse tension de type B (64L1) et une partie du quatrième motif basse tension de type C (64L2) chevauchent un premier motif haute tension (61H) dans le sens de stratification, et
une partie du premier motif haute tension (61H) est présentée dans une zone de la première couche (Z1) qui chevauche une zone où est présentée une partie du quatrième motif basse tension de type C (64L2) dans le sens de stratification.

3. Dispositif de conversion de courant (10) selon la revendication 1, où
la carte de circuit imprimé (70) est une carte de circuit imprimé multicouche comprenant une pluralité de couches de motifs conducteurs stratifiées avec une couche isolante intercalée entre elles, où :
un premier motif basse tension de type A (41L) pour détecter un courant ou une tension du circuit onduleur (40) est en outre formé dans la première couche (Z1) ; et
le premier motif basse tension de type A (41L) ne chevauche pas le motif haute tension (52H) dans le sens de stratification.

4. Dispositif de conversion de courant (10) selon la revendication 3, où
la carte de circuit imprimé (70) comprend en outre une troisième couche (Z3) et une quatrième couche (Z4) de sorte que, lorsqu'une surface sur laquelle sont montés divers composants électriques constituant le circuit onduleur (40) et le circuit de filtre actif (60) est orientée vers le haut, les couches de motifs conducteurs de la première couche, de la deuxième couche, de la troisième couche et de la quatrième couche sont stratifiées de haut en bas,
un deuxième motif basse tension (42L) est formé dans la deuxième couche (Z2),
une partie du deuxième motif basse tension (42L) chevauche un troisième motif haute tension de type A (43H) dans le sens de stratification, et
le troisième motif haute tension de type A (43H) n'est pas le circuit onduleur (40) ni le circuit de filtre actif (60), et est formé dans une zone de la troisième couche (Z3) chevauchant une zone où est présenté le deuxième motif basse tension (42L) dans le sens de stratification.

5. Dispositif de conversion de courant (10) selon l'une des revendications 1 à 4, comprenant en outre :
un circuit de source d'énergie à découpage (80) monté sur la carte de circuit imprimé (70), où
le circuit de filtre actif (60) et le circuit onduleur (40) reçoivent une alimentation électrique provenant du circuit de source d'énergie à découpage (80).

6. Dispositif de conversion de courant (10) selon la revendication 5, où
les zones de montage du circuit de source d'énergie à découpage (80), du circuit de filtre actif (60) et du circuit onduleur (40) dans la carte de circuit imprimé (70) sont séparées, et
les zones de circuit du circuit de source d'énergie à découpage (80), du circuit de filtre actif (60) et du circuit onduleur (40) dans la carte de circuit imprimé (70) sont également séparées.

7. Dispositif de conversion de courant (10) selon la revendication 1, où
le circuit de filtre actif (60) comprend en outre un premier module d'alimentation (50) intégrant le premier circuit de commutation (45) dans un seul boîtier,
le circuit onduleur (40) comprend :
un deuxième module d'alimentation (30) intégrant, dans un seul boîtier, un deuxième circuit de commutation (25) configuré pour convertir l'alimentation en courant continu en alimentation en courant alternatif ayant une fréquence prédéterminée ; et
un refroidisseur configuré pour refroidir le deuxième module d'alimentation (30), et où
le refroidisseur est également utilisé pour refroidir le premier module d'alimentation (50).

8. Dispositif de conversion de courant (10) selon l'une des revendications 1 à 6,
où
le circuit de filtre actif (60) comprend un premier objet lourd (53, 54) étant un composant électrique,
le circuit onduleur (40) comprend un deuxième objet lourd (24) étant un composant électrique, et où,
si la carte de circuit imprimé (70) est partagée en une première zone (701), une deuxième zone (702) et une troisième zone (703) alignées séquentiellement dans une première direction prédéterminée, le premier objet lourd (53, 54) est disposé dans la première zone (701) et le deuxième objet lourd (24) est disposé dans la troisième zone (703).

9. Dispositif de conversion de courant (10) selon la revendication 8, où
le circuit de filtre actif (60) comprend un premier module d'alimentation (50) configuré pour générer un courant de compensation afin de supprimer un courant harmonique,
le circuit onduleur (40) comprend un deuxième module d'alimentation (30) configuré pour convertir le courant continu en courant alternatif ayant une fréquence prédéterminée, et
au moins un module entre le premier module d'alimentation (50) et le deuxième module d'alimentation (30) est disposé dans la deuxième zone (702).

10. Dispositif de conversion de courant (10) selon la revendication 9, où
le premier module d'alimentation (50) et le deuxième module d'alimentation (30) sont tous deux disposés dans la deuxième zone (702).

11. Dispositif de conversion de courant (10) selon la revendication 9 ou la revendication 10, comprenant en outre :
un refroidisseur (200) fixé au premier module d'alimentation (50) et au deuxième module d'alimentation (30) , et configuré pour refroidir le premier module d'alimentation (50) et le deuxième module d'alimentation (30).

12. Dispositif de conversion de courant (10) selon la revendication 11, où
le premier module d'alimentation (50) et le deuxième module d'alimentation (30) sont disposés dans une deuxième direction orthogonale à la première direction, et
le refroidisseur (200) a une forme s'étendant dans la deuxième direction.

13. Dispositif de conversion de courant (10) selon l'une des revendications 8 à 12,
où
au moins un objet entre le premier objet lourd (53, 54) et le deuxième objet lourd (24) est un réacteur.

14. Dispositif de conversion d'énergie (10) selon l'une des revendications 8 à 13,
où,
si au moins un objet parmi le premier objet lourd (53, 54) et le deuxième objet lourd (24) comprend une pluralité de composants, ladite pluralité de composants est agencée dans une deuxième direction orthogonale à la première direction.

15. Dispositif de conversion de courant (10) selon l'une des revendications 8 à 14,
où
la première zone (701) se trouve à une distance inférieure à 1/3 de la longueur de la carte de circuit imprimé (70) dans la première direction à partir d'une première extrémité (70Ya) qui est une extrémité de la carte de circuit imprimé (70) dans la première direction, et
la troisième zone (703) se trouve à une distance inférieure à 1/3 de la longueur de la carte de circuit imprimé (70) dans la première direction à partir d'une deuxième extrémité (70Yb) qui est une autre extrémité de la carte de circuit imprimé (70) dans la première direction.

16. Dispositif de conversion de courant (10) selon l'une des revendications 8 à 15,
où
le montage du premier objet lourd (53, 54) et du deuxième objet lourd (24) sur la carte de circuit imprimé (70) est réalisé lorsque la carte de circuit imprimé (70), sur laquelle le premier objet lourd (53, 54) et le deuxième objet lourd (24) sont placés, traverse un réservoir de brasure (730) dans une deuxième direction orthogonale à la première direction.

17. Dispositif de conversion de courant (10) selon l'une des revendications 1 à 6,
où
le circuit de filtre actif (60) comprend un premier module d'alimentation (50) configuré pour générer un courant de compensation afin de supprimer un courant harmonique,
le circuit onduleur (40) comprend un deuxième module d'alimentation (30) configuré pour convertir le courant continu en courant alternatif ayant une fréquence prédéterminée, et
le dispositif de conversion de courant comprend en outre :
un refroidisseur (200) fixé au premier module d'alimentation (50) et au deuxième module d'alimentation (30), et configuré pour refroidir le premier module d'alimentation (50) et le deuxième module d'alimentation (30) ; et
un premier élément de transfert de chaleur (220) disposé entre le premier module d'alimentation (50) et le refroidisseur (200), et configuré pour élever une impédance entre le premier module d'alimentation (50) et le refroidisseur (200).

18. Dispositif de conversion de courant (10) selon la revendication 17, où
l'épaisseur du premier élément de transfert thermique (220) est déterminée sur la base d'une différence de potentiel entre une borne du premier module d'alimentation (50) et le refroidisseur (200).

19. Dispositif de conversion de courant (10) selon la revendication 17 ou la revendication 18, où
l'impédance de terre du premier élément de transfert thermique (220) est ajustée par traitement de surface sur le premier élément de transfert thermique (220).

20. Dispositif de conversion d'énergie (10) selon l'une des revendications 17 à 19,
où
le refroidisseur (200) comprend :
une partie de refroidissement (201) ; et
une partie d'absorption de chaleur (203) configurée pour transférer la chaleur du premier module de courant (50) et du deuxième module d'alimentation (30) vers la partie de refroidissement (201),
la partie absorbant la chaleur (203) comprend une surface d'absorption de chaleur (203a) entourée d'un côté de longueur parallèle au sens de la longueur de la partie de refroidissement (201) et d'un côté de largeur orthogonal au sens de la longueur, et le premier module d'alimentation (50) et le deuxième module d'alimentation (30) sont fixés à la surface d'absorption de chaleur (203a),
le premier module d'alimentation (50) et le deuxième module d'alimentation (30) sont tous deux des parallélépipèdes rectangulaires, et
la longueur d'un côté de largeur du premier module d'alimentation (50) est égale ou supérieure à celle d'un côté de largeur de la surface d'absorption de chaleur (203a) et égale ou inférieure à celle d'un côté de largeur du deuxième module d'alimentation (30).

21. Dispositif de conversion d'énergie (10) selon l'une des revendications 17 à 20, comprenant en outre :
un deuxième élément de transfert de chaleur (250) disposé entre le deuxième module d'alimentation (30) et le refroidisseur (200), où
l'effet d'élévation de l'impédance entre le deuxième module d'alimentation (30) et le refroidisseur (200) par le deuxième élément de transfert de chaleur (250) est inférieur à l'effet d'élévation de l'impédance entre le premier module d'alimentation (50) et le refroidisseur (200) par le premier élément de transfert de chaleur (220).

22. Dispositif de conversion de courant (10) selon l'une des revendications 1 à 6,
où
le circuit de filtre actif (60) comprend : un premier module d'alimentation (50) intégrant, dans un seul boîtier, une pluralité d'éléments de commutation configurés pour générer un courant de compensation afin de supprimer un courant harmonique et un circuit de commande configuré pour commander les éléments de commutation, et où
une tension de commande du premier module d'alimentation (50) est de 16,0 V ou plus.

23. Dispositif de conversion de courant (10) selon la revendication 22, où la tension de commande du premier module d'alimentation (50) est de 16,5 V.

24. Dispositif de conversion de courant (10) selon la revendication 22 ou la revendication 23, où
le circuit onduleur (40) comprend : un deuxième module d'alimentation (30) intégrant, dans un seul boîtier, une pluralité d'éléments de commutation (25) configurés pour convertir le courant continu en courant alternatif ayant une fréquence prédéterminée et un circuit de commande (26) configuré pour commander les éléments de commutation, et où
une tension de commande du deuxième module d'alimentation (30) est inférieure à une tension de commande du premier module d'alimentation (50).

25. Dispositif de conversion de courant (10) selon la revendication 24, où une tension de commande du deuxième module d'alimentation (30) est de 15,5 V ou moins.
